# EUROPEAN PATENT APPLICATION

(11) **EP 4 410 905 A1**
(43) Date of publication of application: **07.08.2024**
(21) Application number: 22876353.8
(22) Date of filing: 28.09.2022
(51) Int. Cl.: C09D 5/16, C09D 183/04, C09D 183/06, C09D 7/41, C09D 7/61, C09D 7/62, C09D 7/63, C09D 7/65

(54) **ANTIFOULING COATING COMPOSITION**

(30) Priority: 29.09.2021 JP 2021158831; 11.04.2022 JP 2022065214
(71) Applicant: Chugoku Marine Paints, Ltd., Hiroshima 739-0652 (JP)
(72) Inventor: TASHIRO, Shinichi, Otake-shi, Hiroshima 739-0652 (JP); AOI, Atsushi, Otake-shi, Hiroshima 739-0652 (JP)
(74) Representative: Hoffmann Eitle
(86) International application number: PCT/JP2022/036207
(87) International publication number: WO 2023/054487

(57) **Abstract**

The present invention has an object to provide an antifouling coating film superior in surface smoothness, and an antifouling coating composition for forming the same, and also provide a substrate with an antifouling coating film having the antifouling coating film, and a method for producing the same. The antifouling coating composition of the present invention contains at least one curable silicone (A) selected from (1) and (2) below and a slipping agent (C): (1) a polyorganosiloxane having a methyl isobutyl ketoxime group at both ends; (2) a polyorganosiloxane having a hydroxy group at both ends, and organosilane represented by the following formula (I):

R¹ₐSiX₄₋ₐ (I)

wherein R¹ represents a substituted or unsubstituted hydrocarbon group having 1 or more and 10 or less carbon atoms, X is a methyl isobutyl ketoxime group, and a is 0 or 1.

## Description

### Technical Field

The present invention relates to an antifouling coating composition and an antifouling coating film obtained by using the same, and also relates to a substrate with an antifouling coating film and a method for producing the same.

### Background Art

An organopolysiloxane-based antifouling coating film is widely used for the purpose of preventing adhesion of aquatic organisms to ships, underwater structures, fishing materials, and the like. The antifouling coating film has characteristics, such as a low surface free energy and a low elastic modulus, and therefore, not only is capable of preventing adhesion and fixation of macroorganisms, such as barnacles and mussels, but also has excellent advantages of having a lower environmental load as compared with conventional hydration-type and hydrolysis-type antifouling coating films that release coating film components into the environment.

For example, PTL 1 discloses an antifouling coating composition that is a curable organopolysiloxane composition.

### Citation List

### Patent Literature

PTL 1: JP 2017-88653 A

### Summary of Invention

### Technical Problem

Although an antifouling coating film formed from the antifouling coating material disclosed in PTL 1 is superior in the antifouling performance, there has been a room for improvement from the viewpoint of surface smoothness. In addition, there is a need to further reduce the environmental load.

The present invention has an object to provide an antifouling coating film superior in the surface smoothness, and an antifouling coating composition for forming the same. The present invention further has an object to provide a substrate with an antifouling coating film, the substrate having the above antifouling coating film, and a method for producing the same. Solution to Problem

As a result of an intensive and extensive studies in view of the above problems, the present inventors have found that the above problem can be solved by adopting a methyl isobutyl ketoxime group as a hydrolyzable group, thus completing the present invention.

The present invention relates to the following [1] to [15].
[1] An antifouling coating composition containing at least one curable silicone (A) selected from (1) and (2) below and a slipping agent (C):
   (1) a polyorganosiloxane having a methyl isobutyl ketoxime group at both ends
   (2) a polyorganosiloxane having a hydroxy group at both ends, and an organosilane represented by the following formula (I):

      R¹ₐSiX₄₋ₐ (I)

      wherein R¹ represents a substituted or unsubstituted hydrocarbon group having 1 or more and 10 or less carbon atoms, X is a methyl isobutyl ketoxime group, and a is 0 or 1.
[2] The antifouling coating composition according to [1], wherein the curable silicone (A) contains a polyorganosiloxane having a methyl isobutyl ketoxime group at both ends.
[3] The antifouling coating composition according to [1] or [2], wherein the polyorganosiloxane has a polydimethylsiloxane structure.
[4] The antifouling coating composition according to any one of [1] to [3], further containing hydrophobic silica particles (B1).
[5] The antifouling coating composition according to any one of [1] to [4], further containing hydrophilic silica particles (B2).
[6] The antifouling coating composition according to any one of [1] to [5], wherein the slipping agent (C) is one or more selected from the group consisting of a silicone oil, a paraffin oil, an oil or fat, an acrylic resin having a hydrophilic group, and a polyalkylene glycol.
[7] The antifouling coating composition according to [6], wherein the silicone oil is one or more selected from a phenyl-modified silicone oil and a polyether-modified silicone oil.
[8] The antifouling coating composition according to any one of [1] to [7], further containing a coloring pigment (D).
[9] The antifouling coating composition according to any one of [1] to [7], wherein the coloring pigment (D) is contained in an amount of 1% by mass or less in solid content of the antifouling coating composition.
[10] The antifouling coating composition according to [9], wherein the slipping agent (C) is contained in an amount of 30 parts by mass or more and 200 parts by mass or less relative to 100 parts by mass of the polyorganosiloxane.
[11] The antifouling coating composition according to any one of [1] to [10], wherein the curable silicone (A) is contained in an amount of 40% by mass or more and 90% by mass or less in solid content of the antifouling coating composition.
[12] An antifouling coating film formed from the antifouling coating composition according to any one of [1] to [11].
[13] A substrate with an antifouling coating film, including a substrate and the antifouling coating film according to [12] provided on a surface of the substrate.
[14] The substrate with an antifouling coating film according to [13], wherein the substrate is at least one selected from a ship, an underwater structure, a fishing material, and a water supply or drainage pipe.
[15] A method for producing a substrate with an antifouling coating film, the method including a step of applying the antifouling coating composition according to any one of [1] to [11] on a substrate, or impregnating a substrate with the antifouling coating composition according to any one of [1] to [11].

### Advantageous Effects of Invention

The present invention provides an antifouling coating film superior in surface smoothness and an antifouling coating composition for forming the same. The present invention further provides a substrate with an antifouling coating film, the substrate having the above antifouling coating film, and a method for producing the same.

### Description of Embodiments

The antifouling coating composition of the present invention, an antifouling coating film produced by using the antifouling coating composition, a substrate with an antifouling coating film, and a method for producing the substrate with an antifouling coating film will be described in detail below.

### [Antifouling coating composition]

The antifouling coating composition of the present invention contains at least one curable silicone (A) selected from (1) and (2) below and a slipping agent (C):
(1) a polyorganosiloxane having a methyl isobutyl ketoxime group at both ends (hereinafter also referred to as (A-1)).
(2) a polyorganosiloxane having a hydroxy group at both ends, and an organosilane represented by the following formula (I) (hereinafter also referred to as (A-2)).

R¹ₐSiX₄₋ₐ (I)

(In the formula (I), R¹ represents a substituted or unsubstituted hydrocarbon group having 1 or more and 10 or less carbon atoms, X is a methyl isobutyl ketoxime group, and a is 0 or 1.)

According to the antifouling coating composition of the present invention, an antifouling coating film superior in surface smoothness can be provided.

A specific reason for achieving the above effect is not clear, but it is considered that the surface smoothness is surprisingly enhanced by adopting, in the curable silicone (A), a methyl isobutyl ketoxime group as a hydrolyzable group in place of a methyl ethyl ketoxime group which has been conventionally used. European Chemical Agency (ECHA) has pointed out a concern about the safety of methyl ethyl ketoxime produced in curing a conventional product, and provision of a substitute product is strongly demanded in order to reduce the environmental load and the exposure to a coater in a coating environment. Furthermore, it is considered that a superior antifouling performance is exhibited by incorporating the slipping agent (C) in addition to the curable silicone (A).

When the antifouling coating composition has a composition containing substantially no coloring agent, an effect of being superior in transparency is also provided.

Components contained in the antifouling coating composition will be described below.

### [Curable silicone (A)]

The curable silicone (A) is selected from the above (1) and (2), which are each described in detail below.

The curable silicone (A) of the aspect of the above (1) in which the curable silicone (A) is a polyorganosiloxane having a methyl isobutyl ketoxime group at both ends (hereinafter also referred to as "polyorganosiloxane (a1)") is also referred to as (A-1), and the curable silicone (A) in the aspect of the above (2) in which the curable silicone (A) is a polyorganosiloxane having a hydroxy group at both ends (hereinafter also referred to as "polyorganosiloxane (a2)") and an organosilane represented by the formula (I) (hereinafter also referred to as "organosilane (a3)") is also referred to as (A-2).

### <(1) Polyorganosiloxane having a methyl isobutyl ketoxime group at both ends>

The polyorganosiloxane having a methyl isobutyl ketoxime group at both ends (hereinafter also referred to as "polyorganosiloxane (a1)") has at least a polyorganosiloxane structure as a main chain and a reactive moiety having a methyl isobutyl ketoxime group, and has a reactive moiety at both ends.

The main chain has a polyorganosiloxane structure. Examples of the polyorganosiloxane structure include a polydimethylsiloxane structure and a polymethylphenylsiloxane structure, and among them, a polydimethylsiloxane structure is preferred. In the main chain, an alkylene group, a polyoxyalkylene group, or the like may be present in a block form.

In addition, an alkylene group or a polyoxyalkylene group, for example, may be present as a linking moiety between the main chain and a reactive moiety.

The reactive moieties may form a crosslinking structure through a reaction of the reactive moieties of the polyorganosiloxane (a1) with one another or a reaction thereof with an organic silicone crosslinking agent (F) which will be described later contained in the antifouling coating composition, whereby a silicone cured body is produced to form an antifouling coating film. A reactive moiety may also react with a silane coupling agent (G) which will be described later to form a part of the silicone cured body.

The reactive moieties preferably have a methyl isobutyl ketoxime group, and the positions thereof are preferably both ends of the main chain.

The polyorganosiloxane having a methyl isobutyl ketoxime group at both ends is preferably a compound represented by the following formula (II). 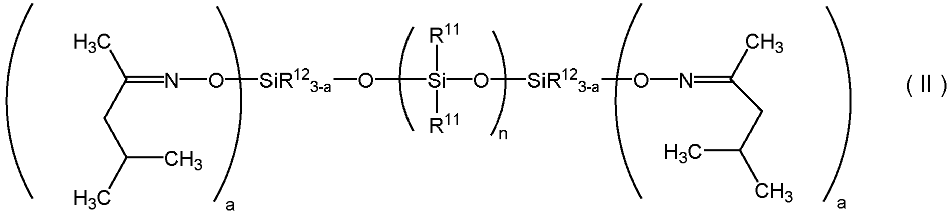 (In the formula (II), R¹¹ and R¹² each independently represent a hydrogen atom, or an alkyl group, an alkenyl group, an alkoxy group, an aryl group, an aralkyl group, or a halogenated alkyl group having 1 or more and 10 or less carbon atoms, n represents an integer of 10 or more and 10,000 or less, and a represents an integer of 1 or more and 3 or less.)

In the formula (II), n represents an integer of 10 or more and 10,000 or less, preferably 100 or more and 1,000 or less, and can be appropriately selected so that the kinematic viscosity and weight average molecular weight which will be described later are within suitable ranges.

a represents an integer of 1 or more and 3 or less, preferably 1 or 2, and more preferably 2.

R¹¹and R¹² each independently represent a hydrogen atom, an alkyl group having 1 or more and 10 or less carbon atoms, an alkenyl group having 2 or more and 10 or less carbon atoms, an alkoxy group having 1 or more and 10 or less carbon atoms, an aryl group having 6 or more and 10 or less carbon atoms, an aralkyl group having 7 or more and 10 or less carbon atoms, or a halogenated alkyl group having 1 or more and 10 or less carbon atoms. The plurality of R¹¹'s may be the same as or different from one another, and when two or more R¹²'s are present, R¹²'s may be the same as or different from one another.

The number of carbon atoms of the alkyl group is preferably 1 or more and 6 or less, more preferably 1 or more and 3 or less, further preferably 1 or 2, and furthermore preferably 1.

The number of carbon atoms of the alkenyl group is preferably 2 or more and 6 or less, more preferably 2 or more and 3 or less, and the alkenyl group is particularly preferably a vinyl group (-CH=CH₂).

The number of carbon atoms of the alkoxy group is preferably 1 or more and 6 or less, more preferably 1 or more and 3 or less, and further preferably 1 or 2.

The number of carbon atoms of the aryl group is preferably 6 or more and 8 or less, the aryl group may have a substituent, such as an alkyl group, on the aromatic ring. Examples of the aryl group include a phenyl group, a tolyl group (methylphenyl group), a xylyl group (dimethylphenyl group), and a naphthyl group.

The number of carbon atoms of the aralkyl group is preferably 7 or more and 9 or less, and examples of the aralkyl group include a benzyl group, a 2-phenylethyl group, a 2-naphtylethyl group, and a diphenylmethyl group.

The number of carbon atoms of the halogenated alkyl group is preferably 1 or more and 6 or less, and for example, a group obtained by replacing a part or all of the hydrogen atoms contained in the alkyl group with a halogen atom, such as a fluorine atom, a chlorine atom, a bromine atom, or an iodine atom, is exemplified.

Among them, R¹¹ is preferably a methyl group, and R¹² is preferably a vinyl group.

### <(2) Polyorganosiloxane having a hydroxy group at both ends, and organosilane represented by the formula (I)>

The polyorganosiloxane having a hydroxy group at both ends (hereinafter also referred to as "polyorganosiloxane (a2)") has at least a polyorganosiloxane structure as a main chain and a reactive moiety having a hydroxy group, and has a reactive moiety at both ends.

The main chain has a polyorganosiloxane structure. Examples of the polyorganosiloxane structure include a polydimethylsiloxane structure and a polymethylphenylsiloxane structure, and among them, a polydimethylsiloxane structure is preferred. In the main chain, an alkylene group, a polyoxyalkylene group, or the like may be present in a block form.

In addition, an alkylene group or a polyoxyalkylene group, for example, may be present as a linking moiety between the main chain and a reactive moiety.

By a reaction of the silanol group with an organosilane represented by the formula (I) which will be described later (hereinafter also referred to as "organosilane (a3)"), a polyorganosiloxane having a methyl isobutyl ketoxime group at both ends (polyorganosiloxane (a1)) is obtained.

The polyorganosiloxane (a2) may form a crosslinking structure through a reaction of the reactive moieties of the polyorganosiloxane (a1) obtained by the above reaction with one another or a reaction thereof with an organic silicone crosslinking agent (F) described later contained in the antifouling coating composition, whereby a silicone cured body is produced to form an antifouling coating film. A reactive moiety may also react with a silane coupling agent (G) described later to form a part of the silicone cured body.

The polyorganosiloxane (a2) is preferably a compound represented by the following formula (III). 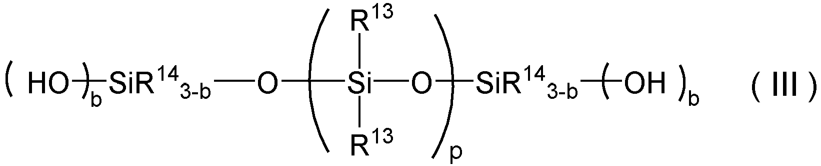 (In the formula (III), p represents an integer of 10 or more and 10,000 or less, b represents an integer of 1 or more and 3 or less, R¹³and R¹⁴ each independently represent a hydrogen atom, an alkyl group, an alkenyl group, an alkoxy group, an aryl group, an aralkyl group, or a halogenated alkyl group having 1 or more and 10 or less carbon atoms.)

In the formula (III), p represents an integer of 10 or more and 10,000 or less, preferably 100 or more and 1,000 or less, and can be appropriately selected so that the viscosity and weight average molecular weight which will be described later are within suitable ranges.

b represents an integer of 1 or more and 3 or less, is preferably 1 or 2, and more preferably 1.

R¹³and R¹⁴ each independently represent a hydrogen atom, an alkyl group having 1 or more and 10 or less carbon atoms, an alkenyl group having 2 or more and 10 or less carbon atoms, an alkoxy group having 1 or more and 10 or less carbon atoms, an aryl group having 6 or more and 10 or less carbon atoms, an aralkyl group having 7 or more and 10 or less carbon atoms, or a halogenated alkyl group having 1 or more and 10 or less carbon atoms. The plurality of R¹³'s may be the same as or different from one another, or when two or more R¹⁴'s are present, R¹⁴'s may be the same as or different from one another.

The number of carbon atoms of the alkyl group is preferably 1 or more and 6 or less, more preferably 1 or more and 3 or less, further preferably 1 or 2, and furthermore preferably 1.

The number of carbon atoms of the alkenyl group is preferably 2 or more and 6 or less, more preferably 2 or more and 3 or less, and the alkenyl group is further preferably a vinyl group (-CH=CH₂).

The number of carbon atoms of the alkoxy group is preferably 1 or more and 6 or less, more preferably 1 or more and 3 or less, and further preferably 1 or 2.

The number of carbon atoms of the aryl group is preferably 6 or more and 8 or less. The aryl group may have a substituent, such as an alkyl group, on the aromatic ring, and examples of the substituent include a phenyl group, a tolyl group (methylphenyl group), a xylyl group (dimethylphenyl group), and a naphthyl group.

The number of carbon atoms of the aralkyl group is preferably 7 or more and 9 or less, and examples of the aralkyl group include a benzyl group, a 2-phenylethyl group, a 2-naphtyleghyl group, and a diphenylmethyl group.

The number of carbon atoms of the halogenated alkyl group is preferably 1 or more and 6 or less, and an example of the halogenated alkyl group is a group obtained by replacing a part or all of the hydrogen atoms contained in the alkyl group with a halogen atom, such as a fluorine atom, a chlorine atom, a bromine atom, or an iodine atom.

Among them, R¹³and R¹⁴ are preferably a methyl group.

The organosilane (a3) is represented by the following formula (I).

R¹ₐSiX₄₋ₐ (I)

(In the formula (I), R¹ represents a substituted or unsubstituted hydrocarbon group having 1 or more and 10 or less carbon atoms, X is a methyl isobutyl ketoxime group, and a is 0 or 1.)

In the formula (I), a is 0 or 1, and from the viewpoint of the reactivity of the obtained polyorganosiloxane having a methyl isobutyl ketoxime group at both ends, a is preferably 1.

R¹ represents a hydrocarbon group having 1 or more and 10 or less carbon atoms, and is preferably an alkyl group having 1 or more and 10 or less carbon atoms or an alkenyl group having 2 or more and 10 or less carbon atoms.

The number of carbon atoms of the alkyl group is preferably 1 or more and 6 or less, more preferably 1 or more and 3 or less, and further preferably 1 or 2.

The number of carbon atoms of the alkenyl group is preferably 2 or more and 6 or less, more preferably 2 or more and 3 or less, and the alkenyl group is preferably a vinyl group (-CH=CH₂).

Among them, R¹ is preferably a vinyl group.

The polyorganosiloxane (a2) and the organosilane (a3) can be mixed with reference to the stoichiometric ratio, and the organosilane (a3) is preferably added in an excess amount relative to the stoichiometric ratio.

Specifically, the amount of the organosilane (a3) blended relative to 100 parts by mass of the polyorganosiloxane (a2) is preferably 1 part by mass or more, more preferably 3 parts by mass or more, further preferably 5 parts by mass or more, and preferably 25 parts by mass or less, more preferably 20 parts by mass or less, further preferably 15 parts by mass or less.

The weight average molecular weight (Mw) of the curable silicone (A) is, from the viewpoint of enhancing the coating workability, the curability of the antifouling coating composition, and the strength of the coating film formed, preferably 500 or more, more preferably 5,000 or more, further preferably 10,000 or more, furthermore preferably 15,000 or more, furthermore preferably 20,000 or more, and preferably 1,000,000 or less, more preferably 100,000 or less, further preferably 50,000 or less, furthermore preferably 40,000 or less.

In the present invention, the "weight average molecular weight (Mw)" is measured using gel permeation chromatography (GPC), and is calculated based on standard polystyrenes each having a known molecular weight.

The viscosity of the curable silicone (A) at 25°C is, from the viewpoint of enhancing the production workability of the antifouling coating composition and the viewpoints of enhancing the coating workability and curability of the antifouling coating composition and enhancing the strength and flexibility of the coating film formed, preferably 20 mPa s or more, more preferably 100 mPa·s or more, further preferably 500 mPa·s or more, furthermore preferably 1,000 mPa s or more, and preferably 100,000 mPa s or less, more preferably 10,000 mPa s or less, further preferably 7,000 mPa s or less.

The viscosity of the curable silicone (A) at 25°C is a viscosity measured with a Brookfield rotational viscometer (for example, model: BM, manufactured by TOKYO KEIKI Inc.).

As described later, when the polyorganosiloxane (a1) or polyorganosiloxane (a2) and silica particles (B) are kneaded, and then added to the antifouling coating composition, the viscosity of the kneaded product is preferably 20 mPa·s or more, more preferably 100 mPa·s or more, further preferably 500 mPa s or more, furthermore preferably 1,000 mPa s or more, and preferably 100,000 mPa·s or less, more preferably 10,000 mPa·s or less, further preferably 7,000 mPa·s or less.

The content of the curable silicone (A) in solid content of the antifouling coating composition is, from the viewpoint of enhancing the strength of the antifouling coating film formed, preferably 40% by mass or more, more preferably 45% by mass or more, further preferably 50% by mass or more, and preferably 90% by mass or less, more preferably 88% by mass or less.

Here, the "solid content of the antifouling coating composition" is a component except for an organic solvent (I) described later and a volatile component contained as a solvent in each component, and can be considered as an antifouling coating film. In addition, the "solid content of the antifouling coating composition" may be calculated by measuring solid content (heating residue) obtained by drying the coating composition in a hot air dryer at 125°C for 1 hour.

The "content of each component in the antifouling coating film" can be calculated as the content of each component in the residue obtained after subtracting the organic solvent (I) described later, a volatile component contained as a solvent in each component, and a component that is eliminated and volatiles after a curing reaction.

In the present invention, the curable silicone (A) is preferably (1) a polyorganosiloxane having a methyl isobutyl ketoxime group at both ends (A-1).

When the curable silicone (A) is (A-1), the coating composition can be prepared as a single-pack type coating composition, and is superior in the viscosity stability and handleability. On the other hand, when the curable silicone (A) is (A-2), the coating composition is required to be a two-pack curable type coating composition, and a coating composition of such a form is liable to vary in the viscosity after mixing a main agent and a curing agent and thus, is inferior in the handleability.

In (A-1), even if two or more methyl isobutyl ketoxime groups are present, when one of the methyl isobutyl ketoxime groups present at an end (a first methyl isobutyl ketoxime group) reacts, the other methyl isobutyl ketoxime groups have a very lower reactivity than the first methyl isobutyl ketoxime group, and thus, a cured body having a structure close to a linear shape tends to be produced. On the other hand, in the case of (A-2), the methyl isobutyl ketoxime groups of the organosilane (a3) have a high reactivity, and thus, crosslinking within the organosilane (a3) tends to occur to form an uneven structure. It is considered that the structure of the cured body may affect the physical properties of the coating film.

When the curable silicone (A) is (A-1), which is highly compatible with the slipping agent (C), the slipping agent (C) can be added in a large amount as described later. Meanwhile, when the curable silicone (A) is (A-2), which is less compatible with the slipping agent (C), it is difficult to blend a large amount of the slipping agent (C).

The antifouling coating composition used in the production method of the present invention preferably contains components other than the curable silicone (A).

Examples of the other components include the silica particles (B), the slipping agent (C), a coloring pigment (D), an organism repellent (E), the organic silicone crosslinking agent (F), the silane coupling agent (G), a curing catalyst (H), the organic solvent (I), a pigment other than the silica particles (B) and the coloring pigment (D), a dehydrating agent other than the organic silicone crosslinking agent (F), an anti-sagging and ant-settling agent, an enzyme, a flame retardant, and a thermal conductivity improver. The silica particles (B), the slipping agent (C), the coloring pigment (D), the organism repellent (E), the organic silicone crosslinking agent (F), the silane coupling agent (G), the curing catalyst (H), and the organic solvent (I) are preferably contained to the extent that the effect of the present invention does not impaired.

### [Silica particles (B)]

From the viewpoint of the hardness, flexibility, and strength of the antifouling coating film formed, the antifouling coating composition of the present invention preferably contains silica particles (B). As the silica particles (B), hydrophobic silica particles (B 1) and hydrophilic silica particles (B2) are exemplified.

The silica particles (B) not only enhance the physical properties of the antifouling coating film formed, but also improve the fluidity and thixotropy of the antifouling coating composition.

The antifouling coating composition preferably contains at least one kind selected from the group consisting of the hydrophobic silica particles (B1) and the hydrophilic silica particles (B2), preferably contains at least the hydrophobic silica particles (B1), and more preferably contains both the hydrophobic silica particles (B1) and the hydrophilic silica particles (B2).

In particular, when the curable silicone (A) is (A-1), the hydrophobic silica particles (B1) and the hydrophilic silica particles (B2) are preferably used in combination.

The present inventors have found that an antifouling coating composition that contains (A-2) as the curable silicone (A) is liable to decrease in the viscosity and it is difficult to blend the hydrophilic silica particles (B2) therein.

The hydrophobic silica particles (B1) are preferably added from the viewpoint of the hardness, flexibility, and strength of the antifouling coating film formed and the viewpoint of enhancing the fluidity and thixotropy of the antifouling coating composition. The hydrophilic silica particles (B2) tend to decrease the viscosity by addition thereof, but has an ability to increase the antifouling performance of the antifouling coating film formed.

As the silica particles (B), a dry method silica and a wet method silica are preferred, and a dry method silica is more preferred.

The hydrophobic silica particles (B1) are of a hydrophobized silica (silica having a hydrophobized surface), which is obtained by treating a hydroxy group bonded to a silicon atom (silanol group) of a silica surface with a hydrophobizing agent. Examples thereof include an aqueous wet method silica and a hydrophobic fumed silica.

Examples of the hydrophobizing agent include an organodisilazane, an organoalkoxysilane, an organochlorosilane, a cyclic organopolysilazane, and a linear organopolysiloxane. Among them, an organodisilazane, an organoalkoxysilane, and an organochlorosilane are preferred. Further specific examples thereof include silazane compounds, such as hexamethyldisilazane, hexaethyldisilazane, hexapropyldisilazane, 1,3-diethyl-1,1,3,3-tetramethyldisilazane, 1,3-dimethyl-1,1,3,3-tetraethyldisilazane, 1,3-divinyltetramethyldisilazane, 1,3-diallyltetramethyldisilazane, 1,3-dibutenyltetramethyldisilazane, 1,3-dipentenyltetramethyldisilazane, 1,3-dihexenyltetramethyldisilazane, 1,3-diheptenyltetramethyldisilazane, 1,3-dioctenyltetramethyldisilazane, 1,3-dinonenyltetramethyldisilazane, 1,3-didecenyltetramethyldisilazane, 1,3-divinyltetraethyldisilazane, and 1,3-dimethyltetravinyldisilazane, alkoxysilane compounds, such as methyltrimethoxysilane, ethyltrimethoxysilane, propyltrimethoxysilane, vinyltrimethoxysilane, allyltrimethoxysilane, and butenyltrimethoxysilane, and chlorosilane compounds, such as trimethylchlorosilane, triethylchlorosilane, tripropylchlorosilane, dimethyldichlorosilane, diethyldichlorosilane, dipropyldichlorosilane, dimethylvinylchlorosilane, and allyldimethylchlorosilane. From the viewpoints of the workability, the reactivity with the silanol group of the silica surface, and the like, a silazane compound or a chlorosilane compound is preferably used, methyltrichlorosilane, dimethyldichlorosilane, hexamethyldisilazane, hexamethylcyclotrisiloxane, octamethylcyclotetrasiloxane, or 1,3-divinyltetramethyldisilazane is more preferably used, and hexamethyldisilazane, 1,3-divinyltetramethyldisilazane, or dimethyldichlorosilane is further preferably used.

Examples of commercial products of the hydrophobic silica include "AEROSIL R974" and "AEROSIL RX200" manufactured by NIPPON AEROSIL CO., LTD.

The hydrophilic silica particles (B2) are of an untreated silica (surface-untreated silica). Examples thereof include a dry method silica (fumed silica, anhydrous silica), and a wet method silica (hydrated silica). A dry method silica is preferred, and fumed silica is more preferred.

Examples of commercial products of the hydrophilic silica include "AEROSIL 200" manufactured by NIPPON AEROSIL CO., LTD.

When the antifouling coating composition of the present invention contains the silica particles (B), the content of the silica particles (B) in solid content of the antifouling coating composition is, from the viewpoint of enhancing the strength and hardness of the antifouling coating film formed, preferably 0.1% by mass or more, more preferably 1% by mass or more, and preferably 20% by mass or less, more preferably 10% by mass or less.

The content of the silica particles (B) relative to 100 parts by mass of the curable silicone (A) is, from the viewpoint of enhancing the strength and hardness of the antifouling coating film formed, preferably 0.5 parts by mass or more, more preferably 1 part by mass or more, and preferably 30 parts by mass or less, more preferably 20 parts by mass or less, further preferably 15 parts by mass or less.

When the hydrophobic silica particles (B1) and the hydrophilic silica particles (B2) are used in combination as the silica particles (B), the ratio (B1/B2) of the content of the hydrophobic silica particles (B1) to the content of the hydrophilic silicas (B2) in the antifouling coating composition is preferably 5/95 or more and 90/10 or less, more preferably 10/80 or more and 80/20 or less, further preferably 15/85 or more and 70/30 or less, furthermore preferably 20/80 or more and 60/40 or less.

### [Slipping agent (C)]

From the viewpoints of the coating workability and the antifouling performance of the antifouling coating composition, the antifouling coating composition of the present invention contains a slipping agent (C).

The slipping agent (C) can impart a slipping property to the antifouling coating film formed to thereby enhance an aquatic-organisms adhesion inhibition (antifouling performance).

The slipping agent (C) preferably has a fluidity at 25°C, and more preferably is liquid. It is considered that, by allowing the slipping agent to have a fluidity, the mobility in an antifouling coating film can be increased to enhance an ability to give slippage to a surface. In addition, the viscosity of the antifouling coating composition can be reduced to improve the applicability.

The slipping agent (C) is preferably one or more selected from an oil and a polymer that has a hydrophilic group.

Examples of the oil include a silicone oil, a paraffin oil, and an oil or fat, and among them, a silicone oil is preferred.

An example of the paraffin oil is liquid paraffin.

The oil or fat is an ester of a fatty acid and glycerol, and examples thereof include an animal oil or fat and a vegetable oil or fat.

Examples the polymer having a hydrophilic group include an acrylic polymer having a hydrophilic group and a polyalkylene glycol, and an acrylic polymer having a hydrophilic group is preferred.

Examples of the polyalkylene glycol include polyethylene glycol, polypropylene glycol, a copolymer of ethylene glycol and propylene glycol, and an alkyl ether thereof.

In other words, the slipping agent (C) is preferably one or more selected from the group consisting of a silicone oil, a paraffin oil, an oil or fat, an acrylic polymer having a hydrophilic group, and a polyalkylene glycol, more preferably one or more selected from a silicone oil and an acrylic polymer having a hydrophilic group, and further preferably a silicone oil. From the viewpoints of the production workability of the antifouling coating composition and the antifouling performance of the antifouling coating film formed, the slipping agent (C) preferably contains an acrylic polymer having a hydrophilic group, and more preferably contains both of a silicone oil and an acrylic polymer having a hydrophilic group.

Hereinbelow, a silicone oil (C1), an acrylic polymer having a hydrophilic group (C2), and a paraffin oil (C3) which are suitable examples of the slipping agent (C) will be described in detail.

### <Silicone oil (C1)>

Examples of the silicone oil (C1) used in the antifouling coating composition of the present invention include dimethylsilicone (polydimethylsiloxane, unmodified silicone) and a modified silicone. The modified silicone is obtained by substituting a part of the methyl groups of dimethylsilicone with an organic group other than a methyl group and may have a reactive group at one end.

Since a silicone oil has a low surface tension and the nature is less likely to change even in a low temperature environment or the like, a silicone oil easily migrates to the surface of an antifouling coating film and can efficiently improve the aquatic-organisms adhesion prevention (antifouling performance) and the damage resistance.

When the silicone oil (C1) has a reactive group at one end, examples of the reactive group include a silanol group, an oximesilyl group, an acyloxysilyl group, an alkoxysilyl group, an alkenyloxysilyl group, an aminosilyl group, and an amidosilyl group, and a silanol group, an oximesilyl group, an acyloxysilyl group, an alkoxysilyl group, and an alkenyloxysilyl group are preferred, a silanol group, an oximesilyl group, an alkoxysilyl group, and an alkenyloxysilyl group are more preferred, a silanol group, an oximesilyl group, and an alkenyloxysilyl group are further preferred, a silanol group and an oximesilyl group are furthermore preferred, and an oximesilyl group is furthermore preferred.

The oxime group is preferably an oxime group having 1 or more and 10 or less carbon atoms, more preferably a dimethyl ketoxime group, a methyl ethyl ketoxime group, a diethyl ketoxime group, a methyl isopropyl ketoxime group, and a methyl isobutyl ketoxime group, and further preferably a methyl isobutyl ketoxime group.

The alkoxy group is preferably an alkoxy group having 1 or more and 6 or less carbon atoms, preferably a methoxy group, an ethoxy group, a propoxy group, and a butoxy group, more preferably a methoxy group and an ethoxy group, and further preferably a methoxy group.

Two or more oxime groups or alkoxy groups may be bonded to one silicon atom, and it is preferred that two or more oxime groups or alkoxy groups are bonded to one silicon atom, and it is more preferred that two oxime groups are bonded to one silicon atom.

The viscosity of the silicone oil (C1) at 25°C is, from the viewpoints of imparting a slipping property to aquatic organisms to enhance the antifouling performance and enhancing the applicability of the antifouling coating composition, preferably 10 mPa·s or more, more preferably 20 mPa·s or more, further preferably 40 mPa s or more, furthermore preferably 60 mPa s or more, furthermore preferably 80 mPa s or more, and preferably 10,000 mPa s or less, more preferably 5,000 mPa·s or less, further preferably 4,000 mPa·s or less.

In this description, the viscosity of the silicone oil (C1) at 25°C refers to a viscosity measured with a Brookfield rotational viscometer.

The kinematic viscosity of the silicone oil (C1) at 25°C is, from the viewpoints of imparting a slipping property to aquatic organisms to enhance the antifouling performance and enhancing the applicability of the antifouling coating composition, preferably 10 mm²/s or more, more preferably 30 mm²/s or more, further preferably 50 mm²/s or more, and preferably 5,000 mm²/s or less, more preferably 4,000 mm²/s or less, further preferably 3,500 mm²/s or less.

Examples of the modified silicone include a phenyl-modified silicone, a polyether-modified silicone, a long chain alkyl-modified silicone, a higher fatty acid ester-modified silicone, an alkyl fluoride-modified silicone, a carbinol-modified silicone, a carboxy-modified silicone, an amino-modified silicone, an epoxy-modified silicone, a methacryl-modified silicone, a mercapto-modified silicone, and a phenol-modified silicone.

Among the modified silicones, from the viewpoints of improving the antifouling performance, imparting a moderate thixotropy to the antifouling coating composition, and improving the applicability thereof, the silicone oil (C1) is preferably one or more selected from a phenyl-modified silicone and a polyether-modified silicone.

From the viewpoint of obtaining an antifouling coating film superior in transparency, the slipping agent (C) preferably contains a phenyl-modified silicone.

Examples of the structure of the modified silicone include a side chain-modified type, a both end-modified type, a one end-modified type, a block type, a side chain- and one end-modified type, and a side chain- and both end-modified type.

Examples of commercial products of the dimethylsilicone include "KF-96-100cs" (manufactured by Shin-Etsu Chemical Co., Ltd., kinematic viscosity (25°C): 100 mm²/s) and "KF-96-1,000cs" (manufactured by Shin-Etsu Chemical Co., Ltd., kinematic viscosity (25°C): 1,000 mm²/s).

The phenyl modification rate of the phenyl-modified silicone is, from the viewpoints of the antifouling performance and of facilitating the formation of an antifouling coating film, preferably 3% or more and 50% or less, more preferably 3% or more and 20% or less, and further preferably 4% or more and 10% or less. The phenyl modification rate is the percentage of the number of phenyl groups to the total number of the phenyl groups and the methyl groups that are bonded to silicon.

The kinematic viscosity of the phenyl-modified silicone at 25°C is, from the viewpoints of the antifouling performance of the antifouling coating film formed and the coating workability of the antifouling coating composition, preferably 10 mm²/s or more and 5,000 mm²/s or less, more preferably 50 mm²/s or more and 4,000 mm²/s or less, and further preferably 80 mm²/s or more and 3,500 mm²/s or less.

Examples of commercial products of the phenyl-modified silicone include "KF-50-100cs" (manufactured by Shin-Etsu Chemical Co., Ltd., phenyl modification rate = 5%, kinematic viscosity (25°C): 100 mm²/s), "KF-50-1,000cs" (manufactured by Shin-Etsu Chemical Co., Ltd., phenyl modification rate = 5%, kinematic viscosity (25°C): 1,000 mm²/s), and "KF-50-3,000cs" (manufactured by Shin-Etsu Chemical Co., Ltd., phenyl modification rate = 5%, kinematic viscosity (25°C): 3,000 mm²/s).

An example of commercial products of the one end methyl ethyl ketoxime- and side chain phenyl-modified silicone is "BCA-011" (manufactured by Shin-Etsu Chemical Co., Ltd., phenyl modification rate = 5%, kinematic viscosity (25°C): 100 mm²/s).

When the antifouling coating composition of the present invention contains a phenyl-modified silicone, the content thereof in solid content of the antifouling coating composition is, from the viewpoints of the antifouling performance of the antifouling coating film formed and the easiness of formation of an antifouling coating film, preferably 0.1% by mass or more, more preferably 1% by mass or more, further preferably 3% by mass or more, furthermore preferably 5% by mass or more, and preferably 50% by mass or less, more preferably 45% by mass or less.

When the antifouling coating composition of the present invention is a clear antifouling coating composition as described later and contains a phenyl-modified silicone, the content of the phenyl-modified silicone in solid content of the antifouling coating composition is, from the viewpoint of the transparency and antifouling performance of the antifouling coating film formed, preferably 15% by mass or more, more preferably 20% by mass or more, and preferably 50% by mass or less, more preferably 45% by mass or less.

Examples of the structure of the polyether-modified silicone include a side-chain-modified type, a both-end-modified type, a one-end-modified type, a block type, a side-chain- and one-end-modified type, and a side-chain- and both-end-modified type. A side-chain-modified type and a both-end-modified type are preferred.

Examples of the polyether (polyalkylene glycol) that constitutes the polyether group (polyalkylene glycol group) of the polyether-modified silicone include polyethylene glycol, polypropylene glycol, and a copolymer of ethylene glycol and propylene glycol. A copolymer of polyethylene glycol and polypropylene glycol is preferred.

From the viewpoints of the antifouling performance of the antifouling coating film formed and of facilitating formation of an antifouling coating film, the proportion of the polyether partial structure in the structure of the polyether-modified silicone is preferably 10% by mass or more and 60% by mass or less, and more preferably 15% by mass or more and 50% by mass or less.

When the antifouling coating composition of the present invention contains a polyether-modified silicone, the content thereof in solid content of the antifouling coating composition is, from the viewpoints of enhancing the antifouling performance of the antifouling coating film formed, facilitating formation of an antifouling coating film, and the like, preferably 0.1% by mass or more, more preferably 0.5% by mass or more, further preferably 1% by mass or more, and preferably 20% by mass or less, more preferably 10% by mass or less, further preferably 7% by mass or less.

When the antifouling coating composition of the present invention contains a polyether-modified silicone containing an ethyleneoxy (-OC₂H₄-) structure unit, from the viewpoint of imparting a good antifouling performance to the antifouling coating film formed, the total mass of the ethyleneoxy (-OC₂H₄-) partial structure relative to 100 parts by mass of the dimethylsiloxane partial structure (-(CH₃)₂Si-O-) of the silicone is preferably 0.1 parts by mass or more and 10 parts by mass or less, and more preferably 0.3 parts by mass or more and 5 parts by mass or less.

The kinematic viscosity of the polyether-modified silicone at 25°C is, from the viewpoints of the antifouling performance, the coating workability of the antifouling coating composition, and the like, preferably 10 mm²/s or more and 5,000 mm²/s or less, more preferably 50 mm²/s or more and 2,000 mm²/s or less, and further preferably 100 mm²/s or more and 500 mm²/s or less.

Examples of commercial products of the polyether-modified silicone include "X-22-4272" (manufactured by Shin-Etsu Chemical Co., Ltd., both-end type, kinematic viscosity (25°C): 270 mm²/s), "KF-6020" (manufactured by Shin-Etsu Chemical Co., Ltd., side-chain type, kinematic viscosity (25°C): 180 mm²/s), "FZ-2203" (manufactured by Dow Corning Toray Co., Ltd., block type), "FZ-2160" (manufactured by Dow Corning Toray Co., Ltd., both-end type), and "POLYFLOW KL-402" (manufactured by Kyoeisha Chemical Co., Ltd., kinematic viscosity (25°C): 350 mm²/s).

The content of the silicone oil (C1) in solid content of the antifouling coating composition is, from the viewpoints of enhancing the antifouling performance of the antifouling coating film formed, facilitating formation of an antifouling coating film, and the like, preferably 1% by mass or more, more preferably 3% by mass or more, and preferably 50% by mass or less, more preferably 45% by mass or less.

### <Acrylic polymer having a hydrophilic group (C2)>

The acrylic polymer having a hydrophilic group (C2) used in the antifouling coating composition of the present invention preferably contains a structural unit derived from a monomer having a hydrophilic group, more preferably contains a structural unit derived from a monomer having a hydrophilic group and a structural unit derived from a hydrophobic monomer, and further preferably is constituted of a structural unit derived from a monomer having a hydrophilic group and a structural unit derived from a hydrophobic monomer.

The content of the structural unit derived from a monomer having a hydrophilic group in the acrylic polymer having a hydrophilic group (C2) is preferably 1% by mass or more and 100% by mass or less, more preferably 3% by mass or more and 80% by mass or less, further preferably 5% by mass or more and 70% by mass or less, and furthermore preferably 10% by mass or more and 60% by mass or less.

It is considered that, since the acrylic polymer has a hydrophilic group, the hydrophilic moiety of the acrylic polymer in the antifouling coating film dissolves or swells, and gradually migrates to the surface of the antifouling coating film, whereby adhesion of aquatic organisms can be efficiently prevented. It is also considered that, owing to the acrylic structure, moderate hydrolysis occurs and the affinity to water varies, and as a result, the antifouling performance can be maintained over a long period of time.

The hydrophilic group of the monomer having a hydrophilic group is, from the viewpoint of the antifouling performance, preferably an ether group or a hydroxy group, and more preferably an ether group.

The content of the structural unit derived from a hydrophobic monomer in the acrylic polymer having a hydrophilic group (C2) is preferably 99% by mass or less, more preferably 97% by mass or less, further preferably 95% by mass or less, furthermore preferably 90% by mass or less, and preferably 20% by mass or more, more preferably 30% by mass or more, further preferably 40% by mass or more.

It is considered that, owing to the hydrophobic monomer, the acrylic polymer has a high affinity to a silicone crosslinking agent or the like which is another component of the antifouling coating film and can uniformly provide a slipping effect to the surface of the antifouling coating film.

The monomer having a hydrophilic group is, from the viewpoint of the antifouling performance, preferably a monomer having a polyalkylene glycol group, a monomer having a hydroxy group, and a monomer having an alkoxyalkyl group, and more preferably a monomer having a polyalkylene glycol group.

Specifically, from the viewpoint of enhancing the antifouling performance, one or more selected from a polyalkylene glycol (meth)acrylate, a hydroxyalkyl (meth)acrylate, an alkoxyalkyl (meth)acrylate, tetrahydrofurfuryl (meth)acrylate, 4-(meth)acryloylmorpholine, and vinylpyrrolidone are preferred, one or more selected from a polyalkylene glycol (meth)acrylate and a hydroxyalkyl (meth)acrylate are more preferred, and a polyalkylene glycol (meth)acrylate is further preferred.

Note that "(meth)acrylate" means "acrylate or methacrylate".

Examples of the polyalkylene glycol (meth)acrylate include those in which one end of a polyalkylene glycol is bonded to (meth)acrylic acid directly via an ester bond or a linking group and the remaining one end thereof is a hydroxy group or an alkoxy group, preferably an alkoxy group.

Among them, a polyalkylene glycol (meth)acrylate in which one end of a polyalkylene glycol is bonded to (meth)acrylic acid directly via an ester bond is preferred, and such a polyalkylene glycol (meth)acrylate in which the remaining one end is an alkoxy group is more preferred.

The (meth)acrylic acid at an end is preferably an acrylic acid or a methacrylic acid, and more preferably an acrylic acid.

Examples of the alkoxy group at an end include a methoxy group, a phenoxy group, and an octoxy group. A methoxy group and a phenoxy group are preferred, and a methoxy group is more preferred.

The polyalkylene glycol constituting the polyalkylene glycol (meth)acrylate is preferably polyethylene glycol, polypropylene glycol, or a copolymer of ethylene glycol and propylene glycol, and more preferably polyethylene glycol.

The average number of alkylene glycol units constituting the polyalkylene glycol in the polyalkylene glycol (meth)acrylate is preferably 2 or more and 25 or less, more preferably 3 or more and 15 or less, and further preferably 5 or more and 12 or less.

Specific examples of the polyalkylene glycol (meth) acrylate include polyethylene glycol mono(meth)acrylate, polypropylene glycol mono(meth)acrylate, polyethylene glycol-propylene glycol) mono(meth)acrylate, poly(ethylene glycol-butylene glycol) mono(meth)acrylate, methoxypolyethylene glycol mono(meth)acrylate, allyloxypoly(ethylene glycol-propylene glycol) mono(meth)acrylate, phenoxypolyethylene glycol-polypropylene glycol methacrylate, octoxypoly(ethylene glycol-propylene glycol) mono(meth)acrylate, dodecyloxypolyethylene glycol mono(meth)acrylate, octadecyloxypolyethylene glycol mono(meth)acrylate, and nonylphenoxypolypropylene glycol acrylate. Methoxypolyethylene glycol mono(meth)acrylate is preferred.

Examples of commercial products of the polyalkylene glycol (meth)acrylate include NK Ester AM-90G (methoxypolyethylene glycol #400 acrylate), NK Ester AM-130G (methoxypolyethylene glycol #550 acrylate), NK Ester M-90G (methoxypolyethylene glycol #400 methacrylate), and NK Ester M-230G (methoxypolyethylene glycol #1000 methacrylate), all of which are manufactured by Shin-Nakamura Chemical Co., Ltd.; Light Acrylate MTG-A (methoxy-triethylene glycol acrylate), Light Acrylate EC-A (ethoxy-diethylene glycol acrylate), Light Acrylate EHDG-AT (2-ethylhexyl-diethylene glycol acrylate), and Light Ester 041MA (methoxy polyethylene glycol methacrylate), all of which are manufactured by Kyoeisha Chemical Co., Ltd.; Blemmer ANP-300 (nonylphenoxypolypropylene glycol acrylate), Blemmer AP-400 (polypropylene glycol monoacrylate), Blemmer-70PEP-350B (polyethylene glycol polypropylene glycol monomethacrylate), Blemmer-55PET-800 (polyethylene glycol tetramethylene glycol monomethacrylate), and Blemmer 50POEP-800B (octoxypolyethylene glycol polypropylene glycol methacrylate), all of which are manufactured by NOF Corporation; and Viscoat #MTG (methoxypolyethylene glycol acrylate), manufactured by Osaka Organic Chemical Industry, Ltd.

Examples of the hydroxyalkyl (meth)acrylate include hydroxyethyl (meth)acrylate and hydroxypropyl (meth)acrylate.

Examples of commercial products of the hydroxyalkyl (meth)acrylate include Light Ester HOA (N) (2-hydroxyethyl acrylate), Light Ester HO-250 (N) (2-hydroxyethyl methacrylate), and Light Ester HOP (N) (2-hydroxypropyl methacrylate), all of which are manufactured by Kyoeisha Chemical Co., Ltd.

An example of the alkoxyalkyl (meth)acrylate is methoxyethyl (meth)acrylate.

The tetrahydrofurfuryl (meth)acrylate is preferably tetrahydrofurfuryl acrylate or tetrahydrofurfuryl methacrylate, and more preferably tetrahydrofurfuryl acrylate.

The 4-(meth)acryloylmorpholine is preferably 4-acryloylmorpholine or 4-methacryloylmorpholine, and more preferably 4-acryloylmorpholine.

Examples of the vinylpyrrolidone include 1-vinyl-2-pyrrolidone (N-vinyl-2-pyrrolidone), 3-acetyl-1-vinylpyrrolidin-2-one, and 3-benzoyl-1-vinylpyrrolidin-2-one. 1-vinyl-2-pyrrolidone is preferred.

Examples of the hydrophobic monomer include an alkyl (meth)acrylate having a branched, linear, or cyclic alkyl group having 1 or more and 30 or less carbon atoms, an aryl (meth)acrylate having an aromatic group having 6 or more and 10 or less carbon atoms, and a (meth)acrylic group-containing silicone. An alkyl (meth)acrylate and a (meth)acrylic group-containing silicone are preferred, and an alkyl (meth)acrylate is more preferred.

The number of carbon atoms of the alkyl group in the alkyl (meth)acrylate is preferably 1 or more and 30 or less, more preferably 4 or more and 18 or less, further preferably 4 or more and 8 or less, and furthermore preferably 4 or more and 6 or less.

The alkyl group is branched, linear, or cyclic, preferably branched or linear, and more preferably branched.

Specific examples of the alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, n-pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, isostearyl (meth)acrylate, phenyl (meth)acrylate, and benzyl (meth)acrylate. Among them, n-butyl (meth)acrylate, isobutyl (meth)acrylate, and 2-ethylhexyl (meth)acrylate are preferred.

The number of carbon atoms of the aromatic group in the aryl (meth)acrylate is preferably 6 or more and 10 or less, and more preferably 6 or more and 7 or less.

Specific examples of the aryl (meth)acrylate include phenyl (meth)acrylate and benzyl (meth)acrylate.

Examples of the (meth)acrylic group-containing silicone include a methacrylic group-containing silicone and an acrylic group-containing silicone, and a methacrylic group-containing silicone is preferred.

As the (meth)acrylic group-containing silicone, one in which a (meth)acrylic group is bonded to one end of a silicone main chain via a linking group and one in which a (meth)acrylic group is directly bonded to one end of a silicone main chain are preferred. One in which a (meth)acrylic group is bonded to one end of a silicone main chain via a linking group is preferred.

The linking group is preferably a trimethylene group.

The silicone main chain is preferably constituted of a linear or branched dimethylsilicone (polydimethylsiloxane), and more preferably constituted of a linear dimethylsilicone.

At the end opposite to the (meth)acrylic group, an alkyl group having 1 or more and 6 or less carbon atoms is more preferably present, and a butyl group is preferably present.

Examples of commercial products of the (meth)acrylic group-containing silicone include Silaplane TM-0701T (tris(trimethylsiloxy)silylpropyl methacrylate), Silaplane FM-0711 (methacrylic group-containing dimethylpolysiloxane, number average molecular weight: 1,000), and Silaplane FM-0721 (methacrylic group-containing dimethylpolysiloxane, number average molecular weight: 5,000), all of which are manufactured by JNC Corporation.

By incorporating the (meth)acrylic group-containing silicone, the antifouling performance of the antifouling coating film formed can be enhanced.

When the antifouling coating composition contains an acrylic polymer having a hydrophilic group (C2) having an ethyleneoxy (-OC₂H₄-) partial structure, from the viewpoint of imparting a good antifouling performance to the antifouling coating film formed, the total mass of the ethyleneoxy (-OC₂H₄-) partial structure relative to 100 parts by mass of the dimethylsiloxane partial structure (-(CH₃)₂Si-O-) of the silicone is preferably 0.1 parts by mass or more and 10 parts by mass or less, and more preferably 0.3 parts by mass or more and 5 parts by mass or less.

The weight average molecular weight (Mw) of the acrylic polymer having a hydrophilic group (C2) is, from the viewpoints of the antifouling performance and the viscosity of the antifouling coating composition, preferably 1,000 or more, more preferably 3,000 or more, further preferably 5,000 or more, furthermore preferably 7,000 or more, and preferably 150,000 or less, more preferably 100,000 or less, further preferably 50,000 or less, furthermore preferably 30,000 or less.

A weight average molecular weight (Mw) of the acrylic polymer having a hydrophilic group (C2) within the above range is preferred in that a good antifouling performance can be imparted to the antifouling coating film.

When the antifouling coating composition of the present invention contains the acrylic polymer having a hydrophilic group (C2), the content of the acrylic polymer having a hydrophilic group (C2) in solid content of the antifouling coating composition is, from the viewpoint of the antifouling performance, preferably 0.2% by mass or more, more preferably 1% by mass or more, further preferably 3% by mass or more, and preferably 50% by mass or less, more preferably 20% by mass or less, further preferably 10% by mass or less.

### <Paraffin oil (C3)>

The paraffin oil (C3) is not particularly limited, and any paraffin oil having such a suitable kinematic viscosity as described later which is appropriately selected from known paraffin oils can be used.

The paraffin oil is preferably liquid paraffin.

The kinematic viscosity of the paraffin oil (C3) at 25°C is, from the viewpoints of the antifouling performance, the coating workability of the antifouling coating composition, and the like, preferably 10 mm²/s or more, more preferably 50 mm²/s or more, further preferably 100 mm²/s or more, and preferably 5,000 mm²/s or less, more preferably 2,000 mm²/s or less, further preferably 500 mm²/s or less.

The content of the paraffin oil (C3) in solid content of the antifouling coating composition of the present invention is, from the viewpoints of enhancing the antifouling performance of the antifouling coating film formed, promoting formation of an antifouling coating film, and the like, preferably 0.1% by mass or more, more preferably 0.3% by mass or more, and preferably 20% by mass or less, more preferably 10% by mass or less.

### [Coloring pigment (D)]

It is also preferred that the antifouling coating composition of the present invention contains a coloring pigment (D).

By incorporating the coloring pigment (D) into the antifouling coating composition of the present invention, the coating film strength can be increased.

The coloring pigment (D) is not particularly limited, and examples thereof include inorganic pigments, such as iron oxide, titanium oxide, carbon black, zinc oxide, aluminum silicate, alumina white, and barium sulfate; and organic pigments, such as naphthol red and phthalocyanine blue. From the viewpoints of the production workability, coating workability, and storage stability of the antifouling coating composition, and the antifouling performance of the antifouling coating film formed, the coloring pigment (D) is preferably an inorganic pigment, and above all, is preferably one or more selected from iron oxide, titanium oxide, carbon black, zinc oxide, aluminum silicate, alumina white, and barium sulfate, preferably one or more selected from iron oxide, titanium oxide, and carbon black, and more preferably one or more selected from iron oxide and titanium oxide.

Examples of the iron oxide include red iron oxide, yellow iron oxide, and black iron oxide.

As the titanium oxide, any of the rutile type, anatase type, and brookite type can be used, and from the viewpoints of the stability of the antifouling coating film and the antifouling coating composition and the availability, the rutile type is preferably used.

When the antifouling coating composition of the present invention contains the coloring pigment (D), the content of the coloring pigment (D) in solid content of the antifouling coating composition is, from the viewpoints of the antifouling performance of the antifouling coating film formed, being superior in the production workability, coating workability, and storage stability of the antifouling coating composition, and the like, preferably 0.01% by mass or more and 20% by mass or less, more preferably 1% by mass or more and 15% by mass or less, and further preferably 4% by mass or more and 12% by mass or less.

### [Clear antifouling coating composition]

It is also preferred that the antifouling coating composition of the present invention has a content of the coloring pigment (D) in solid content of the antifouling coating composition of 0% by mass or more and 1% by mass or less so as to become a clear antifouling coating composition. In this case, the content of the coloring pigment (D) is more preferably 0.5% by mass or less, further preferably 0.1% by mass or less, furthermore preferably 0.01% by mass or less, and most preferably the coloring pigment (D) is not contained.

When the antifouling coating composition of the present invention is a clear antifouling coating composition, there is also an effect such that the antifouling coating composition of this embodiment is superior in the transparency, for example, to the case where a curable silicone having a methyl ethyl ketoxime group is used.

When the antifouling coating composition of the present invention is a clear antifouling coating composition, the content of the coloring pigment (D) is 1% by mass or less. In order to suppress a decrease in the transparency, the amount of an organism repellent (E) which will be described later used is preferably reduced. When the antifouling coating composition is a clear antifouling coating composition, the content of an organism repellent (E) in solid content of the antifouling coating composition is preferably 3% by mass or less, more preferably 1% by mass or less, further preferably 0.1% by mass or less, furthermore preferably 0.01% by mass or less, and most preferably the organism repellent (E) is not contained.

From the viewpoint of enhancing the antifouling performance of the clear antifouling coating composition, the content of the slipping agent (C) in solid content of the clear antifouling coating composition is preferably 20% by mass or more, more preferably 30% by mass or more, further preferably 35% by mass or more, furthermore preferably 40% by mass or more, and from the viewpoints of the film formability, the strength of the antifouling coating film, and the like, preferably 60% by mass or less, more preferably 55% by mass or less, further preferably 50% by mass or less.

When the antifouling coating composition is a clear antifouling coating composition, the content of the slipping agent (C) relative to 100 parts by mass of the polyorganosiloxane in the curable silicone (A), that is, the polyorganosiloxane having a methyl isobutyl ketoxime group at both ends (a1) in the case of (A-1), and the polyorganosiloxane having a hydroxy group at both ends (a2) in the case of (A-2) is, from the viewpoint of enhancing the antifouling performance of the clear antifouling coating composition, 30 parts by mass or more, more preferably 50 parts by mass or more, further preferably 60 parts by mass or more, furthermore preferably 70 parts by mass or more, and from the viewpoints of the film formability, the strength of the antifouling coating film, and the like, preferably 200 parts by mass or less, more preferably 150 parts by mass or less, further preferably 120 parts by mass or less, furthermore preferably 100 parts by mass or less, and particularly preferably 90 parts by mass or less.

When the antifouling coating composition is a clear antifouling coating composition, as described above, from the viewpoint of capability of increasing the content of the slipping agent (C), the curable silicone (A) is preferably (A-1). When the curable silicone (A) is (A-1), an antifouling coating composition having a higher viscosity can be prepared as compared with the case of (A-2), and as a result, even when the content of the slipping agent (C) is within the above range, an antifouling coating composition having a superior anti-sagging property can be produced.

As described hereinabove, when the antifouling coating composition is a clear antifouling coating composition, an antifouling coating composition in which the curable silicone (A) is (A-1) and the content of the slipping agent (C) is within the above range is preferred. Thus, an antifouling coating film that is superior in the smoothness, and also superior in the transparency and the antifouling performance can be obtained.

Because of the superior smoothness and transparency, the antifouling coating composition is suitably used in applications requiring transparency as well as the antifouling performance in water, such as instruments used in or on water (a solar power generation panel, an observation window of meters and instruments, a camera lens, an underwater light, an underwater sensor, etc.) and a monitoring window of a submarine. Furthermore, since the antifouling coating film produced from the antifouling coating composition of the present invention is superior in the smoothness, reflection is suppressed by formation of the antifouling coating film, and thus, an antifouling coating film that is more superior in visibility can be obtained.

### [Organism repellent (E)]

The antifouling coating composition of the present invention preferably contains an organism repellent (E) for the purpose of enhancing the antifouling performance of the antifouling coating film formed.

The organism repellent (E) leach out from the antifouling coating film in water, and has an ability to suppress adhesion of aquatic organisms to the surface of the antifouling coating film to enhance the antifouling performance.

The organism repellent (E) preferably one having a repellent effect on aquatic organisms and having a certain leaching rate into water, and is preferably one or more selected from copper pyrithione, zinc pyrithione, 4-bromo-2-(4-chlorophenyl)-5-(trifluoromethyl)-1H-pyrrole-3-carbonitrile (alias: Tralopyril), and 4,5-dichloro-2-n-octyl-4-isothiazolin-3-one (alias: DCOIT), and from the viewpoints of the leaching from an antifouling coating film and the repellent effect on a wide variety of organism species, one or more selected from copper pyrithione and zinc pyrithione are more preferred, and from the viewpoint of the leaching, copper pyrithione is further preferred. As the organism repellent (E), one kind may be used alone or two or more kinds may be used in combination.

When the antifouling coating composition of the present invention contains the organism repellent (E), the content of the organism repellent (E) in solid content of the antifouling coating composition is, from the viewpoints of the strength and antifouling performance of the antifouling coating film and the applicability of the antifouling coating composition, preferably 0.1% by mass or more, more preferably 1% by mass or more, further preferably 5% by mass or more, and preferably 30% by mass or less, more preferably 20% by mass or less, further preferably 10% by mass or less.

### [Organic silicone crosslinking agent (F)]

For enhancing the curing rate, the strength of an antifouling coating film, and the adhesion to a substrate, the antifouling coating composition of the present invention preferably contains an organic silicone crosslinking agent (F). The organic silicone crosslinking agent is not limited to those that aim at such abilities, and may be blended, for example, for the purpose of acting as a wetting agent of a pigment.

The organic silicone crosslinking agent (F) has three or four hydrolyzable groups on a silicon atom. When having three hydrolyzable groups, the organic silicone crosslinking agent (F) is an organic silane further having one hydrocarbon group, and its partially condensed product is also included. Note that compounds corresponding to the organosilane (a3) are excluded.

The number of the hydrolyzable groups is three or four per silicon atom.

The hydrolyzable group is preferably an alkoxy group.

The alkoxy group is preferably a methoxy group and an ethoxy group.

The hydrocarbon group is preferably a hydrocarbon group having 1 or more and 6 or less carbon atoms, more preferably a methyl group, an ethyl group, and a propyl group, and further preferably a methyl group and an ethyl group.

Examples of the organic silicone crosslinking agent (F) include tetraethyl orthosilicate, a partially hydrolyzed condensate of tetraethyl orthosilicate, an alkyltrialkoxysilane, and oxime silane. Tetraethyl orthosilicate and a partially hydrolyzed condensate of tetraethyl orthosilicate are preferred.

Examples of commercial products of the tetraethyl orthosilicate include "ETHYL SILICATE 28" manufactured by COLCOAT CO., LTD. and "ETHYL ORTHOSILICATE" manufactured by TAMA CHEMICALS CO., LTD.

Examples of commercial products of the partially hydrolyzed condensate of tetraethyl orthosilicate include "SILICATE 40" manufactured by TAMA CHEMICALS CO., LTD., and "WACKER SILICATE TES 40 WN" manufactured by Wacker Asahikasei Silicone Co., Ltd.

An example of commercial products of the alkyltrialkoxysilane include "KBM-13" manufactured by Shin-Etsu Chemical Co., Ltd.

Examples of commercial products of the oxime silane include "MTO(MOS)" (methyl tris(methyl ethyl ketoxime)silane) and "VTO(VOS)" (vinyl tris(methyl ethyl ketoxime)silane ) manufactured by Toray Industries, Inc.

As the organic silicone crosslinking agent (F), one kind may be used alone or two or more kinds may be used in combination.

When the antifouling coating composition of the present invention contains the organic silicone crosslinking agent (F), the content of the organic silicone crosslinking agent (F) in solid content of the antifouling coating composition is preferably 0.1% by mass or more and 5% by mass or less, and more preferably 0.5% by mass or more and 3% by mass or less.

When the antifouling coating composition of the present invention contains the organic silicone crosslinking agent (F), the content of the organic silicone crosslinking agent (F) in the antifouling coating composition relative to 100 parts by mass of the curable silicone (A) is preferably 0.1 parts by mass or more and 5 parts by mass or less, and more preferably 0.5 parts by mass or more and 3 parts by mass or less.

### [Silane coupling agent (G)]

The antifouling coating composition preferably contains a silane coupling agent (G) for the purpose of enhancing the curing rate, the curability of the antifouling coating film, and the adhesion to a substrate.

The silane coupling agent (G) is an organic alkoxysilane having at least one alkoxy group and at least one organic reactive group on a silicon atom.

The alkoxy group is preferably a methoxy group and an ethoxy group, and more preferably a methoxy group.

The silicon atom is bonded to one to three, preferably two or three, and more preferably three alkoxy groups.

Examples of the organic reactive group include an amino group, a mercapto group, an epoxy group, an isocyanate group, a ureido group, a vinyl group, an acryl group, a methacryl group, and a styryl group. An amino group, a mercapto group, an epoxy group, an isocyanate group, and a ureido group are preferred, an amino group, a mercapto group, and an epoxy group are more preferred, and an amino group is further preferred.

As specific examples of the organic reactive group containing an amino group, a 2-(aminoethyl)-3-aminopropyl group and a 3-aminopropyl group are preferred.

Examples of the silane coupling agent (G) include 3-(2-aminoethylamino)propyltrimethoxysilane, 3-aminopropyltrimethoxysilane, 3-aminopropyltriethoxysilane, 3-(2-(2-aminoethylamino)ethylamino)propyltrimethoxysilane, 3-glycidoxypropyltrimethoxysilane, 3-isocyanatopropyltrimethoxysilane, 3-mercaptopropyltrimethoxysilane, and N-phenyl-3-aminopropyltrimethoxysilane. 3-(2-aminoethylamino)propyltrimethoxysilane, 3-aminopropyltrimethoxysilane, and 3-aminopropyltriethoxysilane are preferred, and 3-(2-aminoethylamino)propyltrimethoxysilane is more preferred.

As the silane coupling agent (G), a condensate of the compounds may be used. As the silane coupling agent (G), one kind may be used alone or two or more kinds may be used in combination.

When the antifouling coating composition of the present invention contains the silane coupling agent (G), the content of the silane coupling agent (G) in solid content of the antifouling coating composition is preferably 0.05% by mass or more and 3% by mass or less, and more preferably 0.1% by mass or more and 1% by mass or less.

The content of the silane coupling agent (G) in the antifouling coating composition relative to 100 parts by mass of the curable silicone (A) is preferably 0.03 parts by mass or more and 3 parts by mass or less, and more preferably 0.1 parts by mass or more and 1 part by mass or less.

The antifouling coating composition of the present invention preferably contains the organic silicone crosslinking agent (F) and/or the silane coupling agent (G) for the purpose of enhancing the curability and strength of the antifouling coating film and the adhesion thereof to a substrate.

### [Curing catalyst (H)]

The antifouling coating composition preferably contains a curing catalyst (H) for the purpose of enhancing the curing rate and the film strength of the antifouling coating film.

The curing catalyst (H) is preferably a tin compound, a titanium compound, an alkali metal fatty acid salt, and an amine compound, more preferably a titanium compound and an amine compound, and further preferably a titanium compound.

As the tin compound, dibutyl tin diacetate, dibutyl tin acetoacetonate, dibutyl tin dilaurate, dibutyl tin dioleate, dibutyl tin oxide, dibutyl tin dimethoxide, dibutyl tin dipentanoate, dibutyl tin dioctoate, dibutyl tin dineodecanoate, dioctyl tin dineodecanoate, bis(dibutyl tin laurate) oxide, dibutyl bis(triethoxy siloxy) tin, bis(dibutyl tin acetate) oxide, dibutyl tin bis(ethylmalate), dioctyl tin bis(ethylmalate), tin naphthenate, and tin oleate. Dibutyl tin diacetate, dibutyl tin acetoacetonate, dibutyl tin dilaurate, dibutyl tin dioleate, dibutyl tin oxide, dibutyl tin dimethoxide, dibutyl tin dipentanoate, dibutyl tin dioctoate, and dibutyl tin dineodecanoate are preferred, and dibutyl tin dilaurate is more preferred.

Examples of commercial products of the tin compound include "NEOSTANN U-100" manufactured by Nitto Kasei Co., Ltd. and "Gleck TL" manufactured by DIC Corporation.

Examples of the titanium compound include tetraisopropoxy titanium, tetra-N-butoxy titanium, tetrakis(2-ethylhexoxy) titanium, dipropoxy bis(acetylacetonate) titanium, and titanium isopropoxy octyl glycol.

Examples of an organic metal compound other than the tin compound and titanium compound include zinc naphthenate, zinc stearate, zinc 2-ethyloctoate, iron 2-ethylhexoate, cobalt 2-ethylhexoate, manganese 2-ethylhexoate, cobalt naphthenate, and an alkoxyaluminum compound.

Examples of the alkali metal fatty acid salt include potassium acetate, potassium 2-ethylhexanoate, potassium octanoate, potassium versatate, sodium acetate, sodium 2-ethylhexanoate, sodium octanoate, sodium versatate, lithium oxalate, lithium 2-ethylhexanoate, lithium octanoate, and lithium versatate.

Examples of the amine compound include 1,6-hexanediamine-N,N,N,N-tetramethyl, 2,4,6-tris(dimethylaminomethyl)phenol, and 1,2-dimethylimidazole.

As the curing catalyst (H), one kind may be used alone or two or more kinds may be used in combination.

When the antifouling coating composition of the present invention contains the curing catalyst (H), the content of the curing catalyst (H) in solid content of the antifouling coating composition is, from the viewpoint of enhancing the curing rate, preferably 0.001% by mass or more and 10% by mass or less, more preferably 0.01% by mass or more and 3% by mass or less, and further preferably 0.1% by mass or more and 1% by mass or less.

When the antifouling coating composition of the present invention contains the curing catalyst (H), the content of the curing catalyst (H) in the antifouling coating composition relative to 100 parts by mass of the curable silicone (A) is preferably 0.003 parts by mass or more and 30 parts by mass or less, more preferably 0.03 parts by mass or more and 5 parts by mass or less, and further preferably 0.3 parts by mass or more and 3 parts by mass or less.

### [Organic solvent (I)]

The antifouling coating composition of the present invention may contain an organic solvent (I) for keeping a low viscosity of the coating composition to enhance the coating workability.

Examples of the organic solvent (I) include an aromatic hydrocarbon-based organic solvent, an aliphatic hydrocarbon-based organic solvent, an alicyclic hydrocarbon-based organic solvent, a ketone-based organic solvent, and an ester-based organic solvent. An aromatic hydrocarbon-based organic solvent and a ketone-based organic solvent are preferred, and an aromatic hydrocarbon-based organic solvent is more preferred.

Examples of the aromatic hydrocarbon-based organic solvent include toluene, xylene, and mesitylene, and xylene is preferred.

Examples of the aliphatic hydrocarbon-based organic solvent include pentane, hexane, heptane, and octane.

Examples of the alicyclic hydrocarbon-based organic solvent include cyclohexane, methylcyclohexane, and ethylcyclohexane.

Examples of the ketone-based organic solvent include acetyl acetone, acetone, methyl ethyl ketone, methyl isobutyl ketone, and dimethyl carbonate, and acetylacetone is preferred.

Examples of the ester-based organic solvent include ethyl acetate, propyl acetate, butyl acetate, and propylene glycol monomethyl ether acetate.

As the organic solvent (I), one kind may be used alone or two or more kinds may be used in combination.

When the antifouling coating composition of the present invention contains the organic solvent (I), the content of the organic solvent (I) in the coating composition is, from the viewpoint of enhancing the coating workability, preferably 3% by mass or more, more preferably 10% by mass or more, further preferably 15% by mass or more, and from the viewpoints of suppressing sagging during coating and reducing the environmental load, preferably 40% by mass or less, more preferably 35% by mass or less, further preferably 30% by mass or less.

### [Other optional components]

Examples of the pigment other than the silica particles (B) and the coloring pigment (D) include mica, calcium carbonate, barium carbonate, potassium feldspar, kaolin, and glass short fiber. As the inorganic filler, one kind may be used alone or two or more kinds may be used in combination.

Examples of the dehydrating agent include zeolite, porous alumina, an orthoester, such as an orthoformic acid alkyl ester, orthoboric acid, and an isocyanate compound.

Examples of the anti-sagging and anti-settling agent include organic clay-based waxes (such as a stearate salt, a lecithin salt, and an alkylsulfonic acid salt of Al, Ca or Zn), organic waxes (such as polyethylene wax, oxidized polyethylene wax, amide wax, polyamide wax, and hydrogenated castor oil wax), and a mixture of an organic clay-based wax and an organic wax.

Examples of the enzyme include serine protease, cysteine protease, metalloproteinase, cellulase, hemicellulase, pectinase, and glycosidase.

Examples of the flame retardant include antimony oxide and paraffin oxide.

Examples of the thermal conductivity improver include boron nitride and aluminum oxide.

### [Aspect of antifouling coating composition]

The antifouling coating composition of the present invention may be a single-pack type antifouling coating composition in which the components are contained in one composition or may be a multipack type antifouling coating composition in which the components are contained in two or more composition which are mixed before application. From the viewpoints of preventing denaturation during storage, a multipack type antifouling coating composition is preferred, and from the viewpoint of the coating workability, a single-pack type antifouling coating composition is preferred. In the case of a single-pack type antifouling coating composition, the curable silicone (A) is preferably (A-1).

As the multipack type antifouling coating composition, a two-pack type antifouling coating composition and a three or more-pack, multipack type antifouling coating composition are exemplified. From the viewpoint of the coating workability, a two-pack type antifouling coating composition is preferred, and from the viewpoint of preventing denaturation during storage, a three or more-pack, multipack type antifouling coating composition is preferred.

When the antifouling coating composition of the present invention is a multipack type antifouling coating composition, the polyorganosiloxane (a2) is preferably contained in a different pack from the organosilane (a3), the organic silicone crosslinking agent (F), the silane coupling agent (G), and the curing catalyst (H), and the silane coupling agent (G) is more preferably contained in a further different pack from the organosilane (a3), the organic silicone crosslinking agent (F), and the curing catalyst (H).

The silica particles (B), the coloring pigment (D), and the organism repellent (E) are preferably contained in the same pack as the polyorganosiloxane (a1) or the polyorganosiloxane (a2).

Note that the content of each component in the antifouling coating composition of the present invention is a content relative to the total amount of all the compositions even in the case of a multipack type antifouling coating composition.

### [Method for producing antifouling coating composition]

The antifouling coating composition is preferably produced as follows.

The method preferably has a step of firstly kneading the polyorganosiloxane (a1) or the polyorganosiloxane (a2) and the silica particles (B). Heat may be applied during or after kneading. By previously kneading the components, affinity of the two components increases and aggregation of silica and an increase in the viscosity of the coating composition can be suppressed.

The condition in heating is preferably 100°C or higher, more preferably 100°C or higher and 300°C or lower, and further preferably 140°C or higher and 200°C or lower. The pressure is preferably a normal pressure or a reduced pressure, and the treatment time is preferably 3 hours or more and 30 hours or less.

The antifouling coating composition can be obtained by mixing and stirring the components blended.

When the antifouling coating composition of the present invention is a single-pack type antifouling coating composition, the antifouling coating composition is obtained by appropriately adding the curable silicone (A) which is an essential component and the silica particles (B), the slipping agent (C), the coloring pigment (D), the organism repellent (E), the organic silicone crosslinking agent (F), the silane coupling agent (G), the curing catalyst (H), and the organic solvent (I) which are optional components, and mixing and stirring the added components.

When the antifouling coating composition of the present invention is a multipack type antifouling coating composition, the polyorganosiloxane (a2) is preferably contained in a different pack from the organosilane (a3), the organic silicone crosslinking agent (F), the silane coupling agent (G), and the curing catalyst (H). In the case of a three or more-pack, multipack type antifouling coating composition, the silane coupling agent (G) is preferably contained in a further different pack from the organic silicone crosslinking agent (F) and the curing catalyst (H).

The silica particles (B), the coloring pigment (D), and the organism repellent (E) are preferably contained in the same pack as the polyorganosiloxane (a1) and/or the polyorganosiloxane (a2).

The slipping agent (C) may be contained in any pack, and preferably, the silicone oil (C1), the acrylic polymer having a hydrophilic group (C2), and the paraffin oil (C3) are contained in the pack that contains the polyorganosiloxane (a1) and/or the polyorganosiloxane (a2).

The mixing and stirring is preferably performed at a temperature of 0°C or higher and 50°C or lower.

### [Antifouling coating film]

The antifouling coating film of the present invention is the antifouling coating film formed from the antifouling coating composition described above. The antifouling coating film can be formed by applying the antifouling coating composition of this embodiment on a substrate or impregnating a substrate with the antifouling coating composition of this embodiment, and then, drying and curing the antifouling coating composition.

The antifouling coating film is preferably an antifouling coating film used for the purpose of preventing a substrate from fouling with aquatic organisms in water.

### [Substrate with an antifouling coating film and method for producing the same]

The substrate with an antifouling coating film of the present invention includes a substrate and an antifouling coating film provided on a surface of the substrate.

The method for producing the substrate with an antifouling coating film preferably includes a step of applying the antifouling coating composition of this embodiment on a substrate (application step), or a step of impregnating a substrate with the antifouling coating composition of this embodiment, and preferably further includes a step of drying and curing the antifouling coating composition.

### <Application step>

Examples of a method for applying the antifouling coating composition of the present invention include known methods, such as brush coating, roller coating, spray or the like, roll coater coating, flow coater coating, slit coater coating, gravure coater coating, spin coater coating, curtain roll coater coating, electrostatic coating, immersion coating, silk printing, and spin coating.

The thickness of the coating film formed from the antifouling coating composition of the present invention is set so that the antifouling coating film formed finally has the thickness as described later. The coating film may be formed by one coating operation, or may be formed by two or more coating operations (two or more applications).

The thickness of the antifouling coating film of the present invention is not particularly limited, but preferably 5 µm or more, more preferably 10 µm or more, further preferably 50 µm or more, and preferably 1,000 µm or less, more preferably 500 µm or less, further preferably 300µm or less. When the antifouling coating film is in such an aspect, an antifouling coating film superior in long-term antifouling performance is obtained.

### <Drying and curing step>

The antifouling coating composition of the present invention applied by the above method is allowed to stand, for example, under a condition of 23°C for preferably approximately 0.5 days or more and 14 days or less, more preferably 1 day or more and 10 days or less to dry and cure the antifouling coating composition, whereby an antifouling coating film can be obtained.

The drying and curing of the antifouling coating composition of the present invention may be conducted under heat and/or air blow.

Here, the substrate is not particularly limited, and is preferably a substrate brought into contact with sea water or fresh water, more preferably at least one selected from a ship, an underwater structure, a fishing material, a water supply or drainage pipe, and an instrument used on or in water, more preferably a ship and an underwater structure, and particularly preferably a ship. Specific examples include ships (examples: an outside shell of a ship's hull, in particular, a part from a draft unit to the ship's bottom, of a large scale steel ship, such as a container ship or a tanker, a fishing boat, an FRP boat, a wooden vessel, and a yacht, including both a newly built ship and a repaired ship), underwater structures (examples: a petroleum pipeline, a water conduit, a water circulation pipe, a water supply or drainage port for a factory and a thermal power or nuclear power plant, a marine cable, seawater utilization equipment (such as a seawater pump), a mega-float, a coastal road, an undersea tunnel, seaport equipment, and structures for various underwater civil engineering works in a canal, a water channel, and the like), fishing materials (examples: a rope, a fishing net, a fishing gear, a float, and a buoy), a water supply or drainage pipe for sea water and the like in a factory, a thermal power or nuclear power plant, or the like, instruments used in or on water (such as a solar power generation panel, an observation window of a meter and an instrument, a camera lens, an underwater light, and an underwater sensor), and a monitoring window of a submarine.

The material of the substrate is not particularly limited. Particularly in ships, examples thereof include a steel, aluminum, wood, FRP, glass, and a plastic, and in an instrument used on or in water, examples thereof include glass and a plastic.

The substrate may be treated with another treating agent, such as an antirust agent, or a coating film, such as a primer, may be previously formed on the surface thereof. The substrate may be previously coated with the present composition, or may be an old antifouling coating film that is the present coating film or another antifouling coating film that was formed before and has been deteriorated over time. Thus, the substrate is not particularly limited.

### Examples

The present invention will be more specifically described below based on Examples, but the present invention is not to be limited to the Examples.

### [Production of antifouling coating composition]

### <Kneaded product of curable silicone (A) and silica particles (B)>

The curable silicone (A) and the silica particles (B) shown in Table 1 were kneaded in the ratio shown in Table 1, thereby obtaining a kneaded product.

**Table 1**

| Kneaded product | Composition and properties of kneaded product |
|---|---|
| (1) | Kneaded product of (A) polydimethylsiloxane having a methyl isobutyl ketoxime group at both ends (a1-1) and (B1) hydrophobically-treated silica (b1) |
| | (A)/(B1) (mass ratio) = 90/10 |
| | Viscosity: 5,000 mPa·s |
| (2) | Kneaded product of (A) polydimethylsiloxane having a methyl isobutyl ketoxime group at both ends (a1-2) and (B1) hydrophobically-treated silica (b1) |
| | (A)/(B1) (mass ratio) = 90/10 |
| | Viscosity: 1,200 mPa·s |
| (3) | Kneaded product of (A) polydimethylsiloxane having a methyl isobutyl ketoxime group at both ends (a1-1) and (B2) hydrophilically-treated silica (b2) |
| | (A)/(B2) (mass ratio) = 90/10 |
| | Viscosity: 5,000 mPa·s |
| (4) | Kneaded product of (A) polydimethylsiloxane having a methyl isobutyl ketoxime group at both ends (a1-2) and (B2) hydrophilically-treated silica (b2) |
| | (A)/(B2) (mass ratio) = 90/10 |
| | Viscosity: 1,200 mPa·s |
| (5) | Kneaded product of (A') polydimethylsiloxane having a methyl ethyl ketoxime group at both ends (a1'-1) and (B1) hydrophobically-treated silica (b1) |
| | (A')/(B1) (mass ratio) = 90/10 |
| | Viscosity: 5,000 mPa·s |
| (6) | Kneaded product of (A') polydimethylsiloxane having a methyl ethyl ketoxime group at both ends (a1'-2) and (B 1) hydrophobically-treated silica (b 1) |
| | (A')/(B1) (mass ratio) = 90/10 |
| | Viscosity: 1,200 mPa·s |
| (7) | Kneaded product of (A') polydimethylsiloxane having a methyl ethyl ketoxime group at both ends (a1'-1) and (B2) hydrophilically-treated silica (b2) |
| | (A')/(B2)(mass ratio) = 90/10 |
| | Viscosity: 5,000 mPa·s |
| (8) | Kneaded product of (A') polydimethylsiloxane having a methyl ethyl ketoxime group at both ends (a1'-2) and (B2) hydrophilically-treated silica (b2) |
| | (A')/(B2) (mass ratio) = 90/10 |
| | Viscosity: 1,200 mPa·s |
| (9) | Kneaded product of polydimethylsiloxane having a hydroxy group at both ends (a2-1) and (B 1) hydrophobically-treated silica (b 1) |
| | (a2)/(B1) (mass ratio) = 90/10 |
| | Viscosity: 3,000 mPa·s |

### <Components of antifouling coating composition>

Components used in the antifouling coating composition are shown in Table 2. All of the viscosities and kinematic viscosities in Table 2 are a value at 25°C.

**Table 2**

| | Compound name | Chemical formula, properties, manufacturer, and product name |
|---|---|---|
| Curable silicone (A) | Silanol group-containing silicone (a2-1) | HO-[[Si(CH₃)₂-O-]ₙ-H |
| | | Weight average molecular weight: 28,500, Viscosity: 2,100 mPa·s |
| Slipping agent (C) | Phenyl-modified silicone (c1-1) | "KF-50-100cs" from Shin-Etsu Chemical Co., Ltd. |
| | | Phenyl modification rate: 5%, |
| | | Kinematic viscosity (25°C): 100 mm²/s |
| | Phenyl-modified silicone (c 1-2) | "KF-50-3,000cs" from Shin-Etsu Chemical Co., Ltd. |
| | | Phenyl modification rate: 5%, |
| | | Kinematic viscosity (25°C): 3,000 mm²/s |
| | Polyether-modified silicone (c1-3) | "POLYFLOW KL-402" from Kyoeisha Chemical Co., Ltd. |
| | | Kinematic viscosity (25°C): 175mm²/s |
| | MEKO-, phenyl-modified silicone (c1-4) | "BCA-011" from Shin-Etsu Chemical Co., Ltd. |
| | | One-end-methyl ethyl ketoxime-modified, phenyl-modified dimethylsilicone |
| | | Phenyl modification rate: 5%, |
| | | Kinematic viscosity (25°C): 100 mm²/s |
| | Silicone oil (c 1-5) | "KF-96-100cs" from Shin-Etsu Chemical Co., Ltd. |
| | | Polydimethylsiloxane, |
| | | Kinematic viscosity (25°C): 100 mm²/s |
| | Acrylic polymer having a hydrophilic group (c2-1) | Methoxy polyethylene glycol acrylate-isobutyl acrylate copolymer, |
| | | Solid content: 70% by mass |
| | Paraffin oil (c3) | "Liquid paraffin 350-S" from Sanko Chemical Industry Co., Ltd. |
| | | Kinematic viscosity (25°C): 350 mm²/s |
| Coloring pigment (D) | Titanium oxide | "TITONE R-5N" from Sakai Chemical Industry Co., Ltd. |
| | Black iron oxide | "TODACOLOR KN-320" from Toda Kogyo Corp. |
| | Red iron oxide | "BENGARA KN-V" from Toda Kogyo Corp. |
| Organism repellent (E) | Cupper pyrithione | "Copper Omadine Powder" from Arch UK Biocides Ltd. |
| | | Cu(-S-C₅H₄N-O-)₂ |
| Organic silicone crosslinking agent (F) | Partially hydrolyzed condensate of tetraethyl orthosilicate | "WACKER SILICATE TES 40 WN" from Wacker Asahikasei |
| | | Silicone Co., Ltd., H₅C₂O-[Si(OC₂H₅)₂-O-]ₜ-C₂H₅ |
| | | Solid content: 65% by mass |
| Silane coupling agent (G) | Amino silane | "KBM-603" from Shin-Etsu Chemical Co., Ltd. |
| Curing catalyst (H) | Titanium catalyst | "D-25" from Shin-Etsu Chemical Co., Ltd. |
| Anti-sagging and anti-settling agent | Polyamide wax | "DISPARLON A-603-20X" from Kusumoto Chemicals, Ltd. |
| | | Solid content: 20% by mass |
| Organic solvent (I) | Xylene | - |
| | Butyl acetate | - |
| Organosilane (a3) | Organosilane (a3-1) | "X-93-4096" from Shin-Etsu Chemical Co., Ltd. |
| | | (MIBKO)₃Si-CH=CH₂ |
| | | MIBKO: methyl isobutyl ketoxime group |
| | Organosilane (a3'-1) | "BCA-100" from Shin-Etsu Chemical Co., Ltd. |
| | | (MEKO)₃Si-CH=CH₂ |
| | | MEKO: methyl ethyl ketoxime group |

### <Acrylic polymer having a hydrophilic group (c2-1)>

Synthetic Example 1 (Synthesis of acrylic polymer having a hydrophilic group (c2-1))

A reaction was conducted at a normal pressure and under a nitrogen atmosphere. Into a reaction vessel equipped with a stirrer, a reflux condenser, a thermometer, a nitrogen introducing pipe, and a dropping funnel, 42.86 parts by mass of methyl amyl ketone was charged, and was heated until the temperature of methyl amyl ketone reached 100°C with stirring. While keeping the temperature of the reaction mixture at 100±5°C, a mixture of 40.0 parts by mass of NK ester AM-90G (methoxy polyethylene glycol acrylate, average number of polyethylene glycol units: 9, manufactured by SHIN-NAKAMURA CHEMICAL CO., LTD.), 60.0 parts by mass of isobutyl acrylate, and 4.0 parts by mass of 2,2'-azobis(2-methylbutyronitrile) was added dropwise into the reaction vessel over 4 hours. Then, the reaction mixture was stirred for 2 hours while keeping 100±5°C, thereby obtaining a solution of the acrylic polymer having a hydrophilic group (c2-1). The resulting solution had a solid content of 70.3% by mass and a viscosity of 109 mPa s, and the acrylic polymer having a hydrophilic group (c2-1) had a weight average molecular weight (Mw) of 9,100.

### (Solid content of polymer solution)

The solid content (% by mass) was determined by dividing the mass of the solid content obtained by drying the polymer solution at 108°C and 1 atm for 3 hours by the mass of the polymer solution before drying.

### (Viscosity of polymer solution)

The viscosity (mPa·s) of a polymer solution at a liquid temperature of 25°C was measured with an E-type viscometer (TV-25, manufactured by Toki Sangyo Co., Ltd.).

### (Average molecular weight of polymer)

The weight average molecular weight (Mw) of a polymer was measured by gel permeation chromatography (GPC) under the following conditions.

### (GPC Conditions)

Apparatus: "HLC-8220GPC" (manufactured by TOSOH CORPORATION)
Column: "TSKgel SuperH2000" and "TSKgel SuperH4000" (both manufactured by TOSOH CORPORATION, 6 mm (inner diameter), 15 cm (length)) were connected.
Eluent: tetrahydrofuran (THF)
Flow rate: 0.500 mL/min
Detector: RI
Column thermostat temperature: 40°C
Standard material: polystyrene
Sample preparation method: THF was added to a polymer solution, which was filtered with a membrane filter to prepare a sample for GPC measurement.

### <Antifouling coating composition>

Components were blended according to the blended amounts (parts by mass) shown in Table 3, and were mixed and stirred to obtain a single-pack type antifouling coating composition (Examples 1 to 9 and Comparative Examples 1 to 9).

Components were blended according to the blended amounts (parts by mass) shown in Table 3 were mixed and stirred for each of a pack as a main agent and a pack as a curing agent to obtain a two-pack type antifouling coating composition (Examples 10 to 23 and Comparative Examples 10 to 23).

### [Evaluation]

The resulting coating composition was subjected to the following evaluations.

### <Antifouling performance test>

A sand-blasted steel panel (length 300 mm × width 100 mm × thickness 2.3 mm) was coated with an epoxy resin-based anticorrosion coating material (product name "BANNOH 500", manufactured by CHUGOKU MARINE PAINTS, LTD.) using a spray coater so as to give a dry film thickness of 150 µm, and was dried at a normal temperature (hereinafter, 23°C) for 24 hours. Subsequently, the resultant was coated with an epoxy resin-based binder (product name "CMP BIOCLEAN SG-R", manufactured by CHUGOKU MARINE PAINTS, LTD.) using a spray coater so as to give a dry film thickness of 100 µm and was dried at a normal temperature for 24 hours.

Then, the primer coating film was coated with each of the antifouling coating compositions of Examples and Comparative Examples, which was previously sufficiently mixed, using a spray coater so as to give a dry film thickness of 200 µm, and then was allowed to stand at a normal temperature for 1 week to prepare a test panel with a coating film.

The test panel with an antifouling coating film was stationarily immersed in the Bay of Miyajima, Hiroshima Prefecture. After 3 months, a ratio of the area in which aquatic organisms had adhered to the surface of the test panel was evaluated by visual observation. The antifouling performance was evaluated according to the following criteria.

### (Evaluation criteria)

5: Adhesion area of aquatic organisms was less than 10% of the entire test panel
4: Adhesion area of aquatic organisms was 10% or more and less than 30% of the entire test panel
3: Adhesion area of aquatic organisms was 30% or more and less than 50% of the entire test panel
2: Adhesion area of aquatic organisms was 50% or more and less than 80% of the entire test panel
1: Adhesion area of aquatic organisms was 80% or more of the entire test panel

### <Measurement of smoothness>

A smooth polyvinyl chloride panel (length 150 mm × width 70 mm × thickness 5 mm) was coated with each of the antifouling coating compositions of Examples and Comparative Examples using a spray coater, and was dried at a normal temperature for 7 days. The resulting polyvinyl chloride test panel with an antifouling coating film was subjected to a measurement with a laser displacement meter by a 250-µm mesh in an area of 30 mm × 30 mm to obtain data of 121 × 121 points. Based on the data, Rz (maximum height roughness) and RSm (average length of the roughness curve element) of the coating film were calculated.

### <Evaluation of friction resistance>

On the outer side surface of a polyvinyl chloride cylinder having a diameter of 310 mm, an epoxy-based binder (product name "CMP BIOCLEAN SG-R", manufactured by CHUGOKU MARINE PAINTS, LTD.)" was applied as a primer coating so as to give a film thickness of a dried film of 100 µm, and the coating film obtained after drying was coated with each of the antifouling coating compositions of Examples and Comparative Examples using a spray coater so as to give a dry film thickness of 100 µm, and was dried at a normal temperature for 24 hours.

The friction resistance of the antifouling coating film formed was evaluated using a double-cylinder resistance meter. The double-cylinder resistance meter is composed of two cylinders, i. e., an inner cylinder and an outer cylinder. The inner cylinder having a coating film of a sample to be measured formed on the outer side surface is set inside the outer cylinder filled with artificial sea water, the outer cylinder is rotated to generate a rotational water flow, and the torque stress on the inner cylinder at this time is measured.

A test cylinder with each coating film of Examples and Comparative Examples was used as the inner cylinder, and the measured torque stress was compared with a standard torque stress which was determined by using the inner cylinder with no coating. The increase rate was expressed as the rate of increase of the torque in % and was shown in Table 3. The lower the rate of increase in the torque in %, the higher ability to reduce the friction resistance the coating film has.

The measurement was performed at a rotational speed of the outer cylinder of 1,000 rpm and at a temperature of 23°C.

### <Measurement of contrast ratio>

The contrast ratio was measured according to JIS K 5600-4-1. Specifically, a contrast ratio test paper was coated with each antifouling coating composition of Examples 6 to 9 and Comparative Examples 6 to 9 with a paint applicator so as to give a dry film thickness of 500 µm and was dried at a normal temperature for 7 days. The Y value (YB) of an area obtained by coating a black part of the resulting contrast ratio test paper with an antifouling coating film and the Y value (YW) of an area obtained by coating a white part of the test paper were measured with a spectrocolorimeter (model: SD 5000, manufactured by NIPPON DENSHOKU INDUSTRIES CO., LTD.), and the contrast ratio (%) was determined by (YB/YW×100).

A lower contrast ratio value means a more superior transparency.

**Table 3-1]**

| | Category | Type | Example | | | | | | | | |
|---|---|---|---|---|---|---|---|---|---|---|---|
| | | | 1 | 2 | 3 | 4 | 5 | 6 | 7 | 8 | 9 |
| | (a1) (B1) | Kneaded product (1) | 27.5 | 26.2 | 12.5 | 12.3 | 12.4 | | | | |
| | | Kneaded product (2) | | | | | | 18.5 | 18.5 | 18.5 | 20.0 |
| | (a1) (B2) | Kneaded product (3) | 27.5 | 26.2 | 40.0 | 39.6 | 39.8 | | | | |
| | | Kneaded product (4) | | | | | | 37.0 | 37.0 | 37.0 | 50.0 |
| | (a1') (B1) | Kneaded product (5) | | | | | | | | | |
| | | Kneaded product (6) | | | | | | | | | |
| | (al') (B2) | Kneaded product (7) | | | | | | | | | |
| | | Kneaded product (8) | | | | | | | | | |
| | (C) | Phenyl-modified silicone (c1-1) | | | | | | 37.0 | 20.0 | 29.0 | |
| | | Phenyl-modified silicone (cl-2) | 7.0 | 6.6 | 6.0 | 6.0 | 6.0 | 0.3 | | | |
| | | Polyether-modified silicone (cl-3) | | | | | 0.5 | | | 0.5 | |
| Main agent (one pack) | | MEKO-, phenyl-modified silicone (c1-4) | | | | | | | 11.5 | 10.0 | |
| | | Silicone oil (cl-5) | 3.0 | 3.0 | 3.0 | 3.0 | 3.0 | | | | 10.0 |
| | | Acryl polymer having a hydrophilic group (c2-1) | | 4.8 | | 1.0 | | | 9.0 | | |
| | | Paraffin oil (c3) | | | | | | 2.0 | 2.0 | | |
| | (D) | Titanium oxide | 7.7 | 7.3 | | | | | | | |
| | | Black iron oxide | 0.1 | 0.1 | | | | | | | |
| | | Red iron oxide | | | 5.5 | 5.5 | 5.5 | | | | |
| | (E) | Copper pyrithione | | | 6.5 | 6.5 | 6.5 | | | | |
| | (F) | Organic silicone crosslinking agent | 0.5 | 0.5 | 0.5 | 0.5 | 0.5 | | | | |
| | (G) | Silane coupling agent | | | | | | 0.2 | | | 0.2 |
| | (I) | Xylene | 26.7 | 25.3 | 26.0 | 25.6 | 25.8 | | | | |
| | | Butyl acetate | | | | | | 5.0 | 2.0 | 5.0 | 19.8 |
| Evaluation | Antifouling performance | Adhesion of plants (algae) / 3 months | 4 | 4 | 5 | 5 | 5 | 5 | 5 | 5 | 3 |
| | | Adhesion of animals (barnacles and the like) / 3 months | 5 | 5 | 5 | 5 | 5 | 5 | 5 | 5 | 5 |
| | Smoothness | Rz (µm) | 26 | 55 | 24 | 22 | 22 | 23 | 28 | 27 | 23 |
| | | RSm (µm) | 2662 | 3382 | 2918 | 2465 | 7555 | 2898 | 2454 | 2287 | 3726 |
| | Friction resistance | Torque increase rate (%) | 3.03 | 3.71 | 3.41 | 3.05 | 2.99 | 3.11 | 3.52 | 3.21 | 3.76 |
| | Contrast ratio | JIS K 5600-4-1 YB/YW (%) | - | - | - | - | - | 1.44 | 1.97 | 1.50 | 1.38 |

**[Table 3-1] (continued)**

| | Category | Type | Comparative Example | | | | | | | | |
|---|---|---|---|---|---|---|---|---|---|---|---|
| | | | 1 | 2 | 3 | 4 | 5 | 6 | 7 | 8 | 9 |
| | (a1) (B1) | Kneaded product (1) | | | | | | | | | |
| | | Kneaded product (2) | | | | | | | | | |
| | (a1) (B2) | Kneaded product (3) | | | | | | | | | |
| | | Kneaded product (4) | | | | | | | | | |
| | (al') (B1) | Kneaded product (5) | 27.5 | 26.2 | 12.5 | 12.3 | 12.4 | | | | |
| | | Kneaded product (6) | | | | | | 18.5 | 18.5 | 18.5 | 20.0 |
| | (al') (B2) | Kneaded product (7) | 27.5 | 26.2 | 40.0 | 39.6 | 39.8 | | | | |
| | | Kneaded product (8) | | | | | | 37.0 | 37.0 | 37.0 | 50.0 |
| | (C) | Phenyl-modified silicone (c1-1) | | | | | | 27.0 | 20.0 | 29.0 | |
| | | Phenyl-modified silicone (c1-2) | 7.0 | 6.6 | 6.0 | 6.0 | 6.0 | 0.3 | | | |
| | | Polyether-modified silicone (c1-3) | | | | | 0.5 | | | 0.5 | |
| Main agent (one pack) | | MEKO-, phenyl-modified silicone (c1-4) | | | | | | 10.0 | 11.5 | 10.0 | |
| | | Silicone oil (c1-5) | 3.0 | 3.0 | 3.0 | 3.0 | 3.0 | | | | 10.0 |
| | | Acryl polymer having a hydrophilic group (c2-1) | | 4.8 | | 1.0 | | | 9.0 | | |
| | | Paraffin oil (c3) | | | | | | 2.0 | 2.0 | | |
| | (D) | Titanium oxide | 7.7 | 7.3 | | | | | | | |
| | | Black iron oxide | 0.1 | 0.1 | | | | | | | |
| | | Red iron oxide | | | 5.5 | 5.5 | 5.5 | | | | |
| | (E) | Copper pyrithione | | | 6.5 | 6.5 | 6.5 | | | | |
| | (F) | Organic silicone crosslinking agent | 0.5 | 0.5 | 0.5 | 0.5 | 0.5 | | | | |
| | (G) | Silane coupling agent | | | | | | 0.2 | | | 0.2 |
| | (I) | Xylene | 26.7 | 25.3 | 26.0 | 25.6 | 25.8 | | | | |
| | | Butyl acetate | | | | | | 5.0 | 2.0 | 5.0 | 19.8 |
| Evaluation | Antifouling performance | Adhesion of plants (algae) / 3 months | 4 | 4 | 5 | 5 | 5 | 5 | 5 | 5 | 1 |
| | | Adhesion of animals (barnacles and the like) / 3 months | 5 | 5 | 5 | 5 | 5 | 5 | 5 | 5 | 5 |
| | Smoothness | Rz (µm) | 51 | 51 | 20 | 36 | 32 | 36 | 37 | 32 | 40 |
| | | RSm (µm) | 2202 | 1958 | 1725 | 2939 | 2521 | 1553 | 1663 | 1842 | 1731 |
| | Friction resistance | Torque increase rate (%) | 6.16 | 5.99 | 4.32 | 5.76 | 5.50 | 7.30 | 7.52 | 6.76 | 7.95 |
| | Contrast ratio | JIS K 5600-4-1 YB/YW (%) | - | - | - | - | - | 2.74 | 4.51 | 2.74 | 2.12 |

**[Table 3-2]**

| | Category | Type | Example | | | | | | |
|---|---|---|---|---|---|---|---|---|---|
| | | | 10 | 11 | 12 | 13 | 14 | 15 | 16 |
| Main agent | (a2) (B1) | Kneaded product (9) | 10.0 | 10.0 | 10.0 | 10.0 | 10.0 | 10.0 | 10.0 |
| | (a2) | Silanol group-containing silicone (a2-1) | 52.0 | 52.0 | 52.0 | 52.0 | 52.0 | 47.0 | 47.0 |
| | (C) | Phenyl-modified silicone (cl-2) | | | | | | 5.0 | 5.0 |
| | | Silicone oil (cl-5) | 3.0 | 3.0 | 3.0 | 3.0 | 3.0 | 3.0 | 3.0 |
| | (D) | Titanium oxide | | | | | | | |
| | | Black iron oxide | | | | | | | |
| | | Red iron oxide | 5.0 | 5.0 | 5.0 | 5.0 | 5.0 | 5.0 | 5.0 |
| | (E) | Copper pyrithione | | | | | | | |
| | Anti-sagging and anti-settling agent | Polyamide wax | 2.0 | 2.0 | 2.0 | 2.0 | 2.0 | 2.0 | 2.0 |
| | (I) | Xylene | 16.0 | 16.0 | 16.0 | 16.0 | 16.0 | 16.0 | 16.0 |
| Curing agent | (a3) | Organosilane (a3-1) | 5.0 | 5.0 | 5.0 | 5.0 | 5.0 | 5.0 | 5.0 |
| | | Organosilane (a3'-1) | | | | | | | |
| | (C) | Phenyl-modified silicone (c1-1) | | 5.0 | | | | | |
| | | Phenyl-modified silicone (cl-2) | 5.0 | | | | | | |
| | | Polyether-modified silicone (cl-3) | | | | 5.0 | 2.0 | | 5.0 |
| | | Acryl polymer having a hydrophilic group (c2-1) | | | 5.0 | | 4.5 | 5.0 | |
| | (H) | Titanium catalyst | | | 0.1 | | | | |
| | (I) | Xylene | 2.0 | 2.0 | 1.9 | 2.0 | 0.5 | 2.0 | 2.0 |
| Evaluation | Antifouling performance | Adhesion of plants (algae) / 3 months | 4 | 4 | 5 | 4 | 5 | 5 | 5 |
| | | Adhesion of animals (barnacles and the like) / 3 months | 5 | 5 | 5 | 5 | 5 | 5 | 5 |
| | Smoothness | Rz (µm) | 16 | 16 | 35 | 30 | 25 | 37 | 35 |
| | | RSm (µm) | 6638 | 8070 | 4030 | 5486 | 4196 | 4724 | 4656 |
| | Friction resistance | Torque increase rate (%) | 2.48 | 2.49 | 3.96 | 3.00 | 2.99 | 3.77 | 3.66 |

**[Table 3-2] (continued)**

| | Category | Type | Comparative Example | | | | | | |
|---|---|---|---|---|---|---|---|---|---|
| | | | 10 | 11 | 12 | 13 | 14 | 15 | 16 |
| Main agent | (a2) (B1) | Kneaded product (9) | 10.0 | 10.0 | 10.0 | 10.0 | 10.0 | 10.0 | 10.0 |
| | (a2) | Silanol group-containing silicone (a2-1) | 52.0 | 52.0 | 52.0 | 52.0 | 52.0 | 47.0 | 47.0 |
| | (C) | Phenyl-modified silicone (c1-2) | | | | | | 5.0 | 5.0 |
| | | Silicone oil (c1-5) | 3.0 | 3.0 | 3.0 | 3.0 | 3.0 | 3.0 | 3.0 |
| | (D) | Titanium oxide | | | | | | | |
| | | Black iron oxide | | | | | | | |
| | | Red iron oxide | 5.0 | 5.0 | 5.0 | 5.0 | 5.0 | 5.0 | 5.0 |
| | (E) | Copper pyrithione | | | | | | | |
| | Anti-sagging and anti-settling agent | Polyamide wax | 2.0 | 2.0 | 2.0 | 2.0 | 2.0 | 2.0 | 2.0 |
| | (I) | Xylene | 16.0 | 16.0 | 16.0 | 16.0 | 16.0 | 16.0 | 16.0 |
| Curing agent | (a3) | Organosilane (a3-1) | | | | | | | |
| | | Organosilane (a3'-1) | 5.0 | 5.0 | 5.0 | 5.0 | 5.0 | 5.0 | 5.0 |
| | (C) | Phenyl-modified silicone (c1-1) | | 5.0 | | | | | |
| | | Phenyl-modified silicone (c1-2) | 5.0 | | | | | | |
| | | Polyether-modified silicone (c1-3) | | | | 5.0 | 2.0 | | 5.0 |
| | | Acryl polymer having a hydrophilic group (c2-1) | | | 5.0 | | 4.5 | 5.0 | |
| | (H) | Titanium catalyst | | | 0.1 | | | | |
| | (I) | Xylene | 2.0 | 2.0 | 1.9 | 2.0 | 0.5 | 2.0 | 2.0 |
| Evaluation | Antifouling performance | Adhesion of plants (algae) / 3 months | 4 | 4 | 5 | 5 | 5 | 4 | 4 |
| | | Adhesion of animals (barnacles and the like) / 3 months | 5 | 5 | 5 | 5 | 5 | 5 | 5 |
| | Smoothness | Rz (µm) | 38 | 38 | 45 | 39 | 38 | 38 | 41 |
| | | RSm (µm) | 4262 | 5106 | 3698 | 4417 | 3231 | 4262 | 4505 |
| | Friction resistance | Torque increase rate (%) | 5.05 | 4.97 | 6.73 | 5.33 | 4.99 | 5.68 | 6.07 |

**[Table 3-3]**

| | Category | Type | Example | | | | | | |
|---|---|---|---|---|---|---|---|---|---|
| | | | 17 | 18 | 19 | 20 | 21 | 22 | 23 |
| Main agent | (a2) (B1) | Kneaded product (9) | 10.0 | 10.0 | 10.0 | 10.0 | 10.0 | 10.0 | 10.0 |
| | (a2) | Silanol group-containing silicone (a2-1) | 47.0 | 47.0 | 47.0 | 47.0 | 47.0 | 55.0 | 50.0 |
| | (C) | Phenyl-modified silicone (c1-2) | 5.0 | 5.0 | | | | | |
| | | Silicone oil (c1-5) | 3.0 | 3.0 | 3.0 | 3.0 | 3.0 | 3.0 | 10.0 |
| | (D) | Titanium oxide | | | | | | 7.0 | 7.0 |
| | | Black iron oxide | | | | | | 0.1 | 0.1 |
| | | Red iron oxide | 5.0 | 5.0 | 5.0 | 5.0 | 5.0 | | |
| | (E) | Copper pyrithione | | 5.0 | 5.0 | 5.0 | 5.0 | | |
| | Anti-sagging and anti-settling agent | Polyamide wax | 2.0 | 2.0 | 2.0 | 2.0 | 2.0 | 2.0 | 2.0 |
| | (I) | Xylene | 16.0 | 16.0 | 16.0 | 16.0 | 16.0 | 17.9 | 15.9 |
| Curing agent | (a3) | Organosilane (a3-1) | 5.0 | 5.0 | 5.0 | 5.0 | 5.0 | 5.0 | 5.0 |
| | | Organosilane (a3'-1) | | | | | | | |
| | (C) | Phenyl-modified silicone (c1-1) | | | | | | | |
| | | Phenyl-modified silicone (cl-2) | | | 5.0 | | | | |
| | | Polyether-modified silicone (cl-3) | 2.0 | | | | 0.5 | | |
| | | Acryl polymer having a hydrophilic group (c2-1) | 4.5 | | | 5.0 | 4.5 | | |
| | (H) | Titanium catalyst | | | 0.1 | | | | |
| | (I) | Xylene | 0.5 | 2.0 | 1.9 | 2.0 | 2.0 | | |
| Evaluation | Antifouling performance | Adhesion of plants (algae) / 3 months | 5 | 5 | 5 | 5 | 5 | 4 | 4 |
| | | Adhesion of animals (barnacles and the like) / 3 months | 5 | 5 | 5 | 5 | 5 | 5 | 5 |
| | Smoothness | Rz (µm) | 39 | 24 | 26 | 31 | 36 | 15 | 16 |
| | | RSm (µm) | 5076 | 7804 | 7789 | 5192 | 4173 | 7453 | 7755 |
| | Friction resistance | Torque increase rate (%) | 3.75 | 2.81 | 2.78 | 3.29 | 3.80 | 2.37 | 2.33 |

**[Table 3-3] (continued)**

| | Category | Type | Comparative Example | | | | | | |
|---|---|---|---|---|---|---|---|---|---|
| | | | 17 | 18 | 19 | 20 | 21 | 22 | 23 |
| Main agent | (a2) (B1) | Kneaded product (9) | 10.0 | 10.0 | 10.0 | 10.0 | 10.0 | 10.0 | 10.0 |
| | (a2) | Silanol group-containing silicone (a2-1) | 47.0 | 47.0 | 47.0 | 47.0 | 47.0 | 55.0 | 50.0 |
| | (C) | Phenyl-modified silicone (c1-2) | 5.0 | 5.0 | | | | | |
| | | Silicone oil (c1-5) | 3.0 | 3.0 | 3.0 | 3.0 | 3.0 | 3.0 | 10.0 |
| | (D) | Titanium oxide | | | | | | 7.0 | 7.0 |
| | | Black iron oxide | | | | | | 0.1 | 0.1 |
| | | Red iron oxide | 5.0 | 5.0 | 5.0 | 5.0 | 5.0 | | |
| | (E) | Copper pyrithione | | 5.0 | 5.0 | 5.0 | 5.0 | | |
| | Anti-sagging and anti-settling agent | Polyamide wax | 2.0 | 2.0 | 2.0 | 2.0 | 2.0 | 2.0 | 2.0 |
| | (I) | Xylene | 16.0 | 16.0 | 16.0 | 16.0 | 16.0 | 17.9 | 15.9 |
| Curing agent | (a3) | Organosilane (a3-1) | | | | | | | |
| | | Organosilane (a3'-1) | 5.0 | 5.0 | 5.0 | 5.0 | 5.0 | 5.0 | 5.0 |
| | (C) | Phenyl-modified silicone (c1-1) | | | | | | | |
| | | Phenyl-modified silicone (c1-2) | | | 5.0 | | | | |
| | | Polyether-modified silicone (c1-3) | 2.0 | | | | 0.5 | | |
| | | Acryl polymer having a hydrophilic group (c2-1) | 4.5 | | | 5.0 | 4.5 | | |
| | (H) | Titanium catalyst | | | 0.1 | | | | |
| | (I) | Xylene | 0.5 | 2.0 | 1.9 | 2.0 | 2.0 | | |
| Evaluation | Antifouling performance | Adhesion of plants (algae) / 3 months | 4 | 5 | 5 | 5 | 5 | 2 | 2 |
| | | Adhesion of animals (barnacles and the like) / 3 months | 5 | 5 | 5 | 5 | 5 | 5 | 5 |
| | Smoothness | Rz (µm) | 41 | 31 | 35 | 31 | 41 | 35 | 24 |
| | | RSm (µm) | 4364 | 4911 | 4777 | 5182 | 4272 | 5286 | 5014 |
| | Friction resistance | Torque increase rate (%) | 5.65 | 5.02 | 5.88 | 5.43 | 5.93 | 5.88 | 4.92 |

According to Examples and Comparative Examples, it can be seen that the antifouling coating composition of the present invention can provide an antifouling coating film superior in the antifouling performance and smoothness. Furthermore, in Examples 6 to 9, an antifouling coating film superior in the transparency was provided.

## Claims

1. An antifouling coating composition comprising at least one curable silicone (A) selected from (1) and (2) below and a slipping agent (C):
(1) a polyorganosiloxane having a methyl isobutyl ketoxime group at both ends
(2) a polyorganosiloxane having a hydroxy group at both ends and an organosilane represented by the following formula (I):
R¹ₐSiX₄₋ₐ (I)
wherein R¹ represents a substituted or unsubstituted hydrocarbon group having 1 or more and 10 or less carbon atoms, X is a methyl isobutyl ketoxime group, and a is 0 or 1.

2. The antifouling coating composition according to claim 1, wherein the curable silicone (A) comprises a polyorganosiloxane having a methyl isobutyl ketoxime group at both ends.

3. The antifouling coating composition according to claim 1 or 2, wherein the polyorganosiloxane has a polydimethylsiloxane structure.

4. The antifouling coating composition according to any one of claims 1 to 3, further comprising hydrophobic silica particles (B1).

5. The antifouling coating composition according to any one of claims 1 to 4, further comprising hydrophilic silica particles (B2).

6. The antifouling coating composition according to any one of claims 1 to 5, wherein the slipping agent (C) is one or more selected from the group consisting of a silicone oil, a paraffin oil, an oil or fat, an acrylic resin having a hydrophilic group, and a polyalkylene glycol.

7. The antifouling coating composition according to claim 6, wherein the silicone oil is one or more selected from a phenyl-modified silicone oil and a polyether-modified silicone oil.

8. The antifouling coating composition according to any one of claims 1 to 7, wherein a coloring pigment (D) is contained in an amount of 1% by mass or less in solid content of the antifouling coating composition.

9. The antifouling coating composition according to claim 8, wherein the slipping agent (C) is contained in an amount of 30 parts by mass or more and 200 parts by mass or less relative to 100 parts by mass of the polyorganosiloxane.

10. The antifouling coating composition according to any one of claims 1 to 9, wherein the curable silicone (A) is contained in an amount of 40% by mass or more and 90% by mass or less in solid content of the antifouling coating composition.

11. An antifouling coating film formed from the antifouling coating composition according to any one of claims 1 to 10.

12. A substrate with an antifouling coating film, comprising a substrate and the antifouling coating film according to claim 11 provided on a surface of the substrate.

13. The substrate with an antifouling coating film according to claim 12, wherein the substrate is at least one selected from a ship, an underwater structure, a fishing material, and a water supply or drainage pipe.

14. A method for producing a substrate with an antifouling coating film, the method comprising a step of applying the antifouling coating composition according to any one of claims 1 to 10 on a substrate or impregnating a substrate with the antifouling coating composition according to any one of claims 1 to 10.
